# EUROPEAN PATENT SPECIFICATION

(11) **EP 2 688 945 B1**
(45) Date of publication and mention of the grant of the patent: **18.05.2016**
(21) Application number: 12712192.9
(22) Date of filing: 21.03.2012
(51) Int. Cl.: C08K 3/00, C08K 5/42, C08L 69/00

(54) **POLYCARBONATE COMPOSITION WITH IMPROVED IMPACT STRENGTH**
POLYCARBONATZUSAMMENSETZUNG MIT VERBESSERTER SCHLAGZÄHIGKEIT
COMPOSITION DE POLYCARBONATE AYANT UNE RÉSISTANCE AMÉLIORÉE AUX CHOCS

(30) Priority: 23.03.2011 US 201113069704
(43) Date of publication of application: 29.01.2014
(73) Proprietor: SABIC Global Technologies B.V., 4612 PX Bergen op Zoom (NL)
(72) Inventor: HAO, Ning, Beijing 100007 (CN); VAN DE WETERING, Karin Irene, NL-4615AL Bergen op Zoom (NL); KULKARNI, Amit S., Evansville Indiana 47712 (US)
(74) Representative: Modiano, Micaela Nadia
(86) International application number: PCT/US2012/029904
(87) International publication number: WO 2012/129276

(56) References cited:
- JP-A- 63 230 764
- JP-A- 2007 277 313
- JP-A- 2007 308 529
- DATABASE WPI Week 200946 Thomson Scientific, London, GB; AN 2009-K61272 XP002678503, -& CN 101 451 012 A (TEIJIN CHEM LTD) 10 June 2009 (2009-06-10)

## Description

The present disclosure relates to mineral filled thermoplastic resins that have improved impact strength while maintaining high tensile modulus, good ductility, and good flow properties. Also disclosed herein are methods for preparing and/or using the same.

Polycarbonates (PC) are synthetic engineering thermoplastic resins derived from bisphenols and phosgene, or their derivatives. They are linear polyesters of carbonic acid and can be formed from dihydroxy compounds and carbonate diesters, or by ester interchange. Polycarbonates are a useful class of polymers having many beneficial properties.

Desirably, polymeric compositions for certain applications, such as car parts, should have a combination of high tensile modulus, good ductility, and good flow properties. A high tensile modulus reflects stiffness, or in other words that the molded part will maintain its shape. High ductility and good flow properties reflect how easily the polymeric composition can be poured into a mold for forming the shape of the part.

Higher stiffness can be obtained by the addition of a mineral filler to the polymeric composition. However, the addition of mineral filler reduces the ductility and the flow properties of the polymeric composition. Even highly impact resistant polymers, such as polycarbonates, become brittle at room temperature at high filler loadings. Another conventional way of increasing stiffness is by increasing the weight average molecular weight of the polymer, but this typically also reduces the flow properties and makes it difficult to fill complex or thin-walled molds. Impact modifiers can improve the impact strength of the polymeric composition, but this usually reduces the heat deflection temperature of the composition.

It would be desirable to provide a composition that contains mineral filler and maintains a balance of improved impact strength, high ductility, good flow properties, high stiffness, and high heat deflection temperatures.

The present invention relates to a composition as defined in claims 1-12 and to an article as defined in claims 13 and 14. The present invention also relates to a method as defined in claim 15 of improving the notched izod impact strength of a polycarbonate composition comprising talc, clay, mica, zinc sulfide, zinc oxide or titanium dioxide.

The following is a brief description of the drawings, which are presented for the purposes of illustrating the exemplary embodiments disclosed herein and not for the purposes of limiting the same.
FIG. 1 is a scanning electron micrograph (SEM) of a molded part containing 0% SAS and 0% talc.
FIG. 2 is a SEM of a molded part containing 2% SAS and 0% talc.
FIG. 3 is a SEM of a molded part containing 0% SAS and 10% talc.
FIG. 4 is a SEM of a molded part containing 2% SAS and 10% talc.

The present disclosure may be understood more readily by reference to the following detailed description of desired embodiments and the examples included therein. In the following specification and the claims which follow, reference will be made to a number of terms which shall be defined to have the following meanings.

The singular forms "a," "an," and "the" include plural referents unless the context clearly dictates otherwise.

As used in the specification and in the claims, the term "comprising" may include the embodiments "consisting of" and "consisting essentially of."

Numerical values in the specification and claims of this application, particularly as they relate to polymers or polymer compositions, reflect average values for a composition that may contain individual polymers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values). The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from about 2 to about 4" also discloses the range "from 2 to 4."

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

The term "aliphatic" refers to a linear or branched array of atoms that is not cyclic and has a valence of at least one. Aliphatic groups are defined to comprise at least one carbon atom. The array of atoms may include heteroatoms such as nitrogen, sulfur, silicon, selenium and oxygen in the backbone or may be composed exclusively of carbon and hydrogen. Aliphatic groups may be substituted or unsubstituted. Exemplary aliphatic groups include, but are not limited to, methyl, ethyl, isopropyl, isobutyl, hydroxymethyl (-CH₂OH), mercaptomethyl (-CH₂SH), methoxy, methoxycarbonyl (CH₃OCO-), nitromethyl (-CH₂NO₂), and thiocarbonyl.

The term "alkyl" refers to a linear or branched array of atoms that is composed exclusively of carbon and hydrogen. The array of atoms may include single bonds, double bonds, or triple bonds (typically referred to as alkane, alkene, or alkyne). Alkyl groups may be substituted (i.e. one or more hydrogen atoms is replaced) or unsubstituted. Exemplary alkyl groups include, but are not limited to, methyl, ethyl, and isopropyl. It should be noted that alkyl is a subset of aliphatic.

The term "aromatic" refers to an array of atoms having a valence of at least one and comprising at least one aromatic group. The array of atoms may include heteroatoms such as nitrogen, sulfur, selenium, silicon and oxygen, or may be composed exclusively of carbon and hydrogen. Aromatic groups are not substituted. Exemplary aromatic groups include, but are not limited to, phenyl, pyridyl, furanyl, thienyl, naphthyl and biphenyl.

The term "aryl" refers to an aromatic radical composed entirely of carbon atoms and hydrogen atoms. When aryl is described in connection with a numerical range of carbon atoms, it should not be construed as including substituted aromatic radicals. For example, the phrase "aryl containing from 6 to 10 carbon atoms" should be construed as referring to a phenyl group (6 carbon atoms) or a naphthyl group (10 carbon atoms) only, and should not be construed as including a methylphenyl group (7 carbon atoms). It should be noted that aryl is a subset of aromatic.

The term "cycloaliphatic" refers to an array of atoms which is cyclic but which is not aromatic. The cycloaliphatic group may include heteroatoms such as nitrogen, sulfur, selenium, silicon and oxygen in the ring, or may be composed exclusively of carbon and hydrogen. A cycloaliphatic group may comprise one or more noncyclic components. For example, a cyclohexylmethyl group (C₆H₁₁CH₂) is a cycloaliphatic functionality, which comprises a cyclohexyl ring (the array of atoms which is cyclic but which is not aromatic) and a methylene group (the noncyclic component). Cycloaliphatic groups may be substituted or unsubstituted. Exemplary cycloaliphatic groups include, but are not limited to, cyclopropyl, cyclobutyl, 1,1,4,4-tetramethylcyclobutyl, piperidinyl, and 2,2,6,6-tetramethylpiperydinyl.

The term "cycloalkyl" refers to an array of atoms which is cyclic but is not aromatic, and which is composed exclusively of carbon and hydrogen. Cycloalkyl groups may be substituted or unsubstituted. It should be noted that cycloalkyl is a subset of cycloaliphatic.

In the definitions above, the term "substituted" refers to at least one hydrogen atom on the named radical being substituted with another functional group, such as alkyl, halogen, -OH, -CN, -NO₂, -COOH, etc.

The term "perfluoroalkyl" refers to a linear or branched array of atoms that is composed exclusively of carbon and fluorine.

The term "room temperature" refers to a temperature of 23°C.

The polymeric compositions of the present disclosure comprise (A) a polycarbonate polymer; (B) a mineral filler; and (C) a sulfonate salt. The polymeric compositions also have a combination of desirable properties, particularly the tensile modulus with other mechanical properties.

As used herein, the terms "polycarbonate" and "polycarbonate polymer" mean compositions having repeating structural carbonate units of the formula (1): 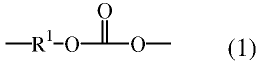 in which at least about 60 percent of the total number of R¹ groups are aromatic organic radicals and the balance thereof are aliphatic, alicyclic, or aromatic radicals. In one embodiment, each R¹ is an aromatic organic radical, for example a radical of the formula (2):

A¹-Y¹-A² (2)

wherein each of A¹ and A² is a monocyclic divalent aryl radical and Y¹ is a bridging radical having one or two atoms that separate A¹ from A². In an exemplary embodiment, one atom separates A¹ from A². Illustrative non-limiting examples of radicals of this type are -O-, -S-, -S(O)-, -S(O₂)- -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ may be a hydrocarbon group or a saturated hydrocarbon group such as methylene, cyclohexylidene, or isopropylidene.

Polycarbonates may be produced by the interfacial reaction of dihydroxy compounds having the formula HO-R¹-OH, wherein R¹ is as defined above. Dihydroxy compounds suitable in an interfacial reaction include the dihydroxy compounds of formula (A) as well as dihydroxy compounds of formula (3)

HO-A¹-Y¹-A²-OH (3)

wherein Y¹, A¹ and A² are as described above. Also included are bisphenol compounds of general formula (4): 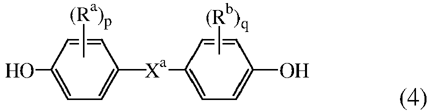 wherein R^{a} and R^{b} each represent a halogen atom or a monovalent hydrocarbon group and may be the same or different; p and q are each independently integers of 0 to 4; and X^{a} represents one of the groups of formula (5): 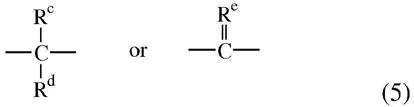 wherein R^{c} and R^{d} each independently represent a hydrogen atom or a monovalent linear or cyclic hydrocarbon group and R^{e} is a divalent hydrocarbon group.

Some illustrative, non-limiting examples of suitable dihydroxy compounds include the following: resorcinol, hydroquinone, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as combinations comprising at least one of the foregoing dihydroxy compounds.

Specific examples of the types of bisphenol compounds that may be represented by formula (3) include 1,1-bis(4-hydroxyphenyl) methane, 1,1-bis(4-hydroxyphenyl) ethane, 2,2-bis(4-hydroxyphenyl) propane (hereinafter "bisphenol-A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, and 1,1-bis(4-hydroxy-t-butylphenyl) propane. Combinations comprising at least one of the foregoing dihydroxy compounds may also be used.

Branched polycarbonates are also useful, as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic tuchloride, tris-p-hydroxy phenyl ethane (THPE), isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. All types of polycarbonate end groups are contemplated as being useful in the polycarbonate composition, provided that such end groups do not significantly affect desired properties of the thermoplastic compositions. The branching agents may be added at a level of about 0.05 wt% to about 2.0 wt%.

In particular embodiments, the polycarbonate is a branched polycarbonate that has been branched with from about 0.01 mole% to about 0.5 mole% of a trifunctional phenol, i.e. a compound having one phenol group and at least two other functional groups (which can also be phenol if desired).

"Polycarbonates" and "polycarbonate polymers" as used herein further includes blends of polycarbonates with other copolymers comprising carbonate chain units. An exemplary copolymer is a polyester carbonate, also known as a copolyester-polycarbonate. Such copolymers further contain, in addition to recurring carbonate chain units of the formula (1), repeating units of formula (6) 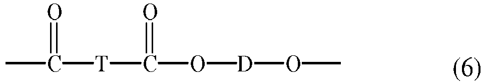 wherein D is a divalent radical derived from a dihydroxy compound, and may be, for example, a C₂₋₁₀ alkylene radical, a C₆₋₂₀ alicyclic radical, a C₆₋₂₀ aromatic radical or a polyoxyalkylene radical in which the alkylene groups contain 2 to about 6 carbon atoms, specifically 2, 3, or 4 carbon atoms; and T is a divalent radical derived from a dicarboxylic acid, and may be, for example, a C₂₋₁₀ alkylene radical, a C₆₋₂₀ alicyclic radical, a C₆₋₂₀ alkyl aromatic radical, or a C₆₋₂₀ aromatic radical.

In one embodiment, D is a C₂₋₆ alkylene radical. In another embodiment, D is derived from an aromatic dihydroxy compound of formula (7): 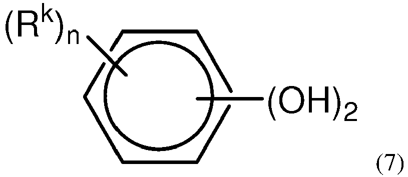 wherein each R^{k} is independently a C₁₋₁₀ hydrocarbon group, and n is 0 to 4. The halogen is usually bromine. Examples of compounds that may be represented by the formula (7) include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, or the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specific dicarboxylic acid comprises a mixture of isophthalic acid and terephthalic acid wherein the weight ratio of terephthalic acid to isophthalic acid is about 10:1 to about 0.2:9.8. In another specific embodiment, D is a C₂₋₆ alkylene radical and T is p-phenylene, m-phenylene, naphthalene, a divalent cycloaliphatic radical, or a mixture thereof. This class of polyester includes the poly(alkylene terephthalates).

In other embodiments, poly(alkylene terephthalates) may be used. Specific examples of suitable poly(alkylene terephthalates) are poly(ethylene terephthalate) (PET), poly(1,4-butylene terephthalate) (PBT), poly(ethylene naphthanoate) (PEN), poly(butylene naphthanoate), (PBN), (polypropylene terephthalate) (PPT), polycyclohexanedimethanol terephthalate (PCT), and combinations comprising at least one of the foregoing polyesters. Also contemplated are the above polyesters with a minor amount, e.g., from about 0.5 to about 10 percent by weight, of units derived from an aliphatic diacid and/or an aliphatic polyol to make copolyesters.

Copolymers comprising alkylene terephthalate repeating ester units with other ester groups may also be useful. Useful ester units may include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s may also include poly(alkylene cyclohexanedicarboxylate)s. Of these, a specific example is poly(1,4-cyclohexanedimethanol-1,4-cyclohexanedicarboxylate) (PCCD), having recurring units of formula (8): 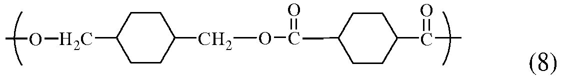 wherein, as described using formula (6), R² is a 1,4-cyclohexanedimethylene group derived from 1,4-cyclohexanedimethanol, and T is a cyclohexane ring derived from cyclohexanedicarboxylate or a chemical equivalent thereof, and may comprise the cis-isomer, the trans-isomer, or a combination comprising at least one of the foregoing isomers.

Another exemplary copolymer comprises polycarbonate blocks and polydiorganosiloxane blocks, also known as a polycarbonate-polysiloxane copolymer. The polycarbonate blocks in the copolymer comprise repeating structural units of formula (1) as described above, for example wherein R¹ is of formula (2) as described above. These units may be derived from reaction of dihydroxy compounds of formula (3) as described above.

The polydiorganosiloxane blocks comprise repeating structural units of formula (9) (sometimes referred to herein as 'siloxane'): 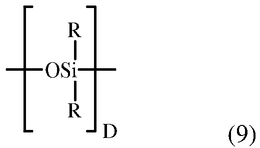 wherein each occurrence of R is same or different, and is a C₁₋₁₃ monovalent organic radical. For example, R may be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₀ aryl group, C₆-C₁₀ aryloxy group, C₇-C₁₃ aralkyl group, C₇-C₁₃ aralkoxy group, C₇-C₁₃ alkaryl group, or C₇-C₁₃ alkaryloxy group. Combinations of the foregoing R groups may be used in the same copolymer.

The value of D in formula (9) may vary widely depending on the type and relative amount of each component in the thermoplastic composition, the desired properties of the composition, and like considerations. Generally, D may have an average value of 2 to about 1000, specifically about 2 to about 500, more specifically about 5 to about 100. In one embodiment, D has an average value of about 10 to about 75, and in still another embodiment, D has an average value of about 40 to about 60. Where D is of a lower value, e.g., less than about 40, it may be desirable to use a relatively larger amount of the polycarbonate-polysiloxane copolymer. Conversely, where D is of a higher value, e.g., greater than about 40, it may be necessary to use a relatively lower amount of the polycarbonate-polysiloxane copolymer.

A combination of a first and a second (or more) polycarbonate-polysiloxane copolymers may be used, wherein the average value of D of the first copolymer is less than the average value of D of the second copolymer.

In one embodiment, the polydiorganosiloxane blocks are provided by repeating structural units of formula (10): 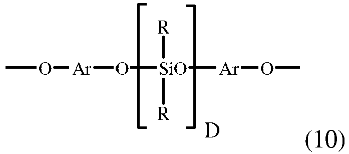 wherein D is as defined above; each R may be the same or different, and is as defined above; and Ar may be the same or different, and is a substituted or unsubstituted C₆-C₃₀ arylene radical, wherein the bonds are directly connected to an aromatic moiety. Suitable Ar groups in formula (10) may be derived from a C₆-C₃₀ dihydroxyarylene compound, for example a dihydroxyarylene compound of formula (3), (4), or (7) above. Combinations comprising at least one of the foregoing dihydroxyarylene compounds may also be used. Specific examples of suitable dihydroxyarlyene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulphide), and 1,1-bis(4-hydroxy-t-butylphenyl) propane. Combinations comprising at least one of the foregoing dihydroxy compounds may also be used.

Such units may be derived from the corresponding dihydroxy compound of the following formula (11): 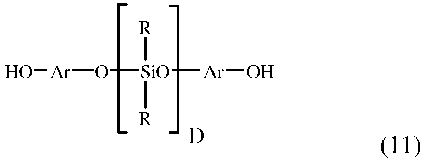 wherein Ar and D are as described above. Such compounds are further described in U.S. Patent No. 4,746,701 to Kress et al. Compounds of this formula may be obtained by the reaction of a dihydroxyarylene compound with, for example, an alpha, omega-bisacetoxypolydiorangonosiloxane under phase transfer conditions.

In another embodiment the polydiorganosiloxane blocks comprise repeating structural units of formula (12): 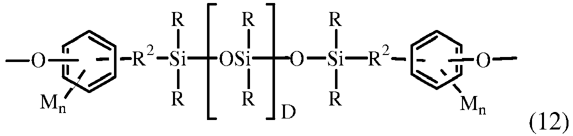 wherein R and D are as defined above. R² in formula (12) is a divalent C₂-C₈ aliphatic group. Each M in formula (12) may be the same or different, and may be cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkaryl, or C₇-C₁₂ alkaryloxy, wherein each n is independently 0, 1, 2, 3, or 4.

In one embodiment, M is an alkyl group such as methyl, ethyl, or propyl, an alkoxy group such as methoxy, ethoxy, or propoxy, or an aryl group such as phenyl, or tolyl; R² is a dimethylene, trimethylene or tetramethylene group; and R is a C₁₋₈ alkyl, haloalkyl such as trifluoropropyl, cyanoalkyl, or aryl such as phenyl or tolyl. In another embodiment, R is methyl, or a mixture of methyl and phenyl. In still another embodiment, M is methoxy, n is one, R² is a divalent C₁-C₃ aliphatic group, and R is methyl.

These units may be derived from the corresponding dihydroxy polydiorganosiloxane (13): 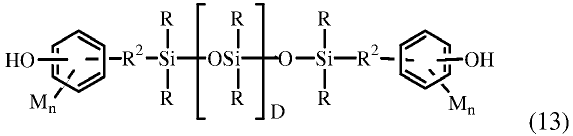 wherein R, D, M, R², and n are as described above.

Such dihydroxy polysiloxanes can be made by effecting a platinum catalyzed addition between a siloxane hydride of the formula (14), 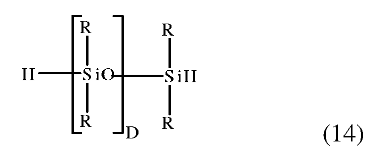 wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. Mixtures comprising at least one of the foregoing may also be used.

Suitable polycarbonates can be manufactured by processes such as interfacial polymerization and melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., about 8 to about 10. The most commonly used water immiscible solvents include methylene chloride, 1,2-dichloroethane, chlorobenzene, toluene, and the like. Suitable carbonate precursors include, for example, a carbonyl halide such as carbonyl bromide or carbonyl chloride, or a haloformate such as a bishaloformate of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors may also be used.

Rather than utilizing the dicarboxylic acid per se, it is possible, and sometimes even desired, to employ the reactive derivatives of the acid, such as the corresponding acid halides, in particular the acid dichlorides and the acid dibromides. Thus, for example, instead of using isophthalic acid, terephthalic acid, or mixtures thereof, it is possible to employ isophthaloyl dichloride, terephthaloyl dichloride, and mixtures thereof.

Among the phase transfer catalysts that may be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or a C₆₋₁₈ aryloxy group. Suitable phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. An effective amount of a phase transfer catalyst may be about 0.1 to about 10 wt% based on the weight of bisphenol in the phosgenation mixture. In another embodiment an effective amount of phase transfer catalyst may be about 0.5 to about 2 wt% based on the weight of bisphenol in the phosgenation mixture.

Alternatively, melt processes may be used to make the polycarbonates. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury® mixer, twin screw extruder, or the like to form a uniform dispersion. Volatile monohydric phenol is removed from the molten reactants by distillation and the polymer is isolated as a molten residue.

A polycarbonate-polysiloxane copolymer may be manufactured by reaction of diphenolic polysiloxane (13) with a carbonate source and a dihydroxy aromatic compound of formula (3), optionally in the presence of a phase transfer catalyst as described above. Suitable conditions are similar to those useful in forming polycarbonates. For example, the copolymers are prepared by phosgenation, at temperatures from below 0°C to about 100°C, desirably about 25°C to about 50°C. Since the reaction is exothermic, the rate of phosgene addition may be used to control the reaction temperature. The amount of phosgene required will generally depend upon the amount of the dihydric reactants. Alternatively, the polycarbonate-polysiloxane copolymers may be prepared by co-reacting in a molten state, the dihydroxy monomers and a diaryl carbonate ester, such as diphenyl carbonate, in the presence of a transesterification catalyst as described above. Siloxane groups may also be present at or attached to the ends of the copolymer as well.

In the production of a polycarbonate-polysiloxane copolymer, the amount of dihydroxy polydiorganosiloxane is selected so as to provide the desired amount of polydiorganosiloxane units in the copolymer. The amount of polydiorganosiloxane units may vary widely, i.e., may be about 1 wt% to about 99 wt% of polydimethylsiloxane, or an equivalent molar amount of another polydiorganosiloxane, with the balance being carbonate units. The particular amounts used will therefore be determined depending on desired physical properties of the thermoplastic composition, the value of D (within the range of 2 to about 1000), and the type and relative amount of each component in the thermoplastic composition, including the type and amount of polycarbonate, type and amount of impact modifier, type and amount of polycarbonate-polysiloxane copolymer, and type and amount of any other additives. Suitable amounts of dihydroxy polydiorganosiloxane can be determined by one of ordinary skill in the art without undue experimentation using the guidelines taught herein. For example, the amount of dihydroxy polydiorganosiloxane may be selected so as to produce a copolymer comprising about 1 wt% to about 75 wt%, or about 1 wt% to about 50 wt% polydimethylsiloxane, or an equivalent molar amount of another polydiorganosiloxane. In one embodiment, the copolymer comprises about 5 wt% to about 40 wt%, optionally about 5 wt% to about 25 wt% polydimethylsiloxane, or an equivalent molar amount of another polydiorganosiloxane, with the balance being polycarbonate. In a particular embodiment, the copolymer may comprise about 20 wt% siloxane. Such polycarbonate-polysiloxane copolymers are commercially available as LEXAN EXL from SABIC Innovative Plastics.

In specific embodiments, the polycarbonate polymer is derived from a dihydroxy compound having the structure of Formula (I): 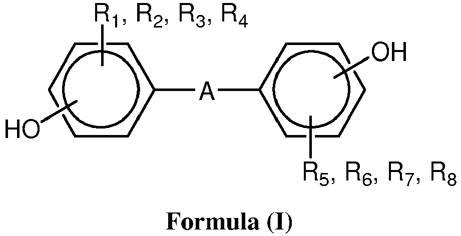 wherein R₁ through R₈ are each independently selected from hydrogen,nitro, cyano, C₁-C₂₀ alkyl, C₄-C₂₀ cycloalkyl, and C₆-C₂₀ aryl; and A is selected from a bond, -O-, -S-,

-SO₂-, C₁-C₁₂ alkyl, C₆-C₂₀ aromatic, and C₆-C₂₀ cycloaliphatic.

In specific embodiments, the dihydroxy compound of Formula (I) is 2,2-bis(4-hydroxyphenyl) propane (i.e. bisphenol-A or BPA). Other illustrative compounds of Formula (I) include: 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 1,1-bis(4-hydroxyphenyl)cyclohexane; 4,4'dihydroxy-1,1-biphenyl; 4,4'-dihydroxy-3,3'-dimethyl-1,1-biphenyl; 4,4'-dihydroxy-3,3 '-dioctyl-1,1 -biphenyl; 4,4'-dihydroxydiphenylether; 4,4'-dihydroxydiphenylthioether; and 1,3 -bis(2-(4-hydroxyphenyl)-2-propyl)benzene.

In more specific embodiments, the polycarbonate polymer (A) is a bisphenol-A homopolymer. Exemplary bisphenol-A polymers may have a weight average molecular weight (Mw) from 15,000 to 50,000 daltons, according to polycarbonate standards. The polycarbonate can be a linear or branched polycarbonate.

In some embodiments, the polycarbonate polymer may be post-consumer recycled material or post-industrial recycled material (generically referred to as PCR). Typically, such PCR polycarbonate has a lower Mw, impact strength, and flow properties compared to virgin polycarbonate. However, this difference in properties can generally be ameliorated by compositional design of the blend, aided by the addition of a stabilizer package. The stabilizer package may contain, for example, a phosphite stabilizer, a thioester antioxidant such as those known under the mark SEENOX, a hindered phenol, and/or a mold release agent like pentaerythritol tetrastearate. The PCR polycarbonate is typically used along with virgin polycarbonate, in an amount of from greater than 0 up to 50 wt%, by weight of the PCT and virgin polycarbonate combined.

The polymeric composition also comprises (B) a mineral filler comprising talc, clay, mica, zinc sulfide, zinc oxide, or titanium dioxide. Barium sulfate (BaSO₄) and magnesium oxide (MgO) are not suitable as mineral fillers. The mineral filler may have any morphology, such as fibrous, modular, needle shaped, or lamellar. Desirably, the mineral filler has a median particle size (i.e. D₅₀) of 15 microns or less, including a median particle size of 10 microns or less. In particular embodiments, the talc has a median particle size of from about 1 micron to about 5 microns. In such embodiments, the mineral filler may have a topsize (D₉₀) of 15 microns or less, including 10 microns or less. Speaking very generally, smaller filler particle size allows for better improvement in impact strength.

The polymeric composition also comprises (C) a sulfonate salt. It has been surprisingly discovered that the combination of (B) mineral filler and (C) sulfonate salt can improve the impact strength and the ductility of the composition while maintaining the flow properties of the composition.

As explained in further detail below, and without being bound by theory, it is believed that the sulfonate salt acts at the interface between the mineral filler and the polycarbonate polymer, resulting in poor filler adhesion to the matrix. This gives rise to an improvement in impact resistance with an acceptable trade in slightly lower stiffness. This poor matrix adhesion of the filler is apparently also responsible for improved ductility of the polymeric composition. It is believed that the sulfonate salt has a polar head and a non-polar tail, with the polar head interacting with the mineral filler and the non-polar tail compatibilizing with the polycarbonate matrix. Generally speaking, the polarity of the head is due to the presence of the sulfonate (SO₃⁻) group.

The sulfonate salt has the structure of Formula (II):

T-E Formula (II)

wherein T is aliphatic and contains at least 7 carbon atoms; E is aliphatic, aromatic, or cycloaliphatic, and E contains at least one SO₃⁻M⁺ group, where each M is an alkali metal. Here, T represents the non-polar tail, and E represents the polar head of the sulfonate salt.

Possible exemplary structures showing different polar heads for Formula (II) are illustrated below as Formulas (i), (ii), and (iii):

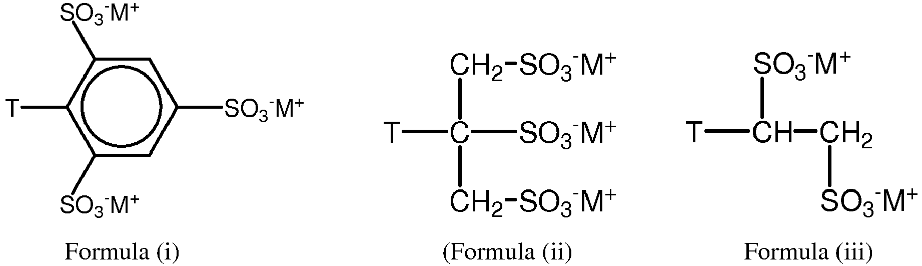

In more particular embodiments of Formula (II), T is alkyl and E is alkyl, cycloalkyl, or aryl.

It should be noted that Formula (II) does not encompass certain flame retardants such as diphenyl sulfone sulfonate (KSS), sodium toluene sulfonate (NaTS), or perfluoroalkane sulfonate (Rimar salt).

In more specific embodiments, the sulfonate salt has the structure of Formula (III):

CH₃-(CH₂)ₙ-(Ar)ₘ-(SO₃⁻M⁺)ₚ Formula (III)

wherein n is an integer from 6 to 17; m is 0 or 1; Ar is aromatic or cycloaliphatic; p is an integer from 1 to 5; and each M is an alkali metal. Exemplary alkali metals include sodium and potassium. Hydrogen is not considered an alkali metal. Exemplary sulfonate salts include sodium n-nonyl sulfonate (where n=8, m=0, M=Na, p=1) and sodium dodecylbenzene sulfonate (where n=11, m=1, Ar=phenyl, M=Na, p=1). These compounds are commercially available from sources such as Croda and Sigma-Aldrich. It should also be noted that the sulfonate salt is generally a blend of different sulfonate compounds that have the same head, but have tails of different lengths. For example, a given amount of sodium n-nonyl sulfonate typically also includes sodium n-octyl sulfonate, sodium n-decyl sulfonate, etc.

In embodiments, the polymeric composition comprises from about 20 wt% to about 95 wt% of the polycarbonate (A); from at least 2 wt% to about 30 wt% of the mineral filler (B); and from at least 0.1 wt% to about 5 wt% of the sulfonate salt (C). These values are based on the total weight of the composition.

In more specific embodiments, the polymeric composition comprises from about 50 wt% to about 95 wt% of the polycarbonate polymer (A), or from about 60 wt% to about 75 wt% of the polycarbonate polymer (A).

In more specific embodiments, the polymeric composition comprises at least 3 wt%, from at least 2 wt% to about 5 wt%, from about 5 wt% to about 20 wt%, or from about 10 wt% to about 30 wt% of the mineral filler (B).

In more specific embodiments, the polymeric composition comprises at least 0.5 wt%, from at least 0.25 wt% to about 5 wt%, from about 0.8 wt% to about 1.5 wt%, from about 0.5 wt% to about 2.5 wt%, about 1 wt%, from about 0.5 wt% to about 4 wt%, from about 0.6 wt% to about 2 wt%, or from about 0.75 wt% to about 1.5 wt% of the sulfonate salt (C).

In particular versions, the polymeric composition comprises from about 70 wt% to about 90 wt% of the polycarbonate (A); from about 8 wt% to about 20 wt% of the mineral filler (B); and from about 0.5 wt% to about 2.5 wt% of the sulfonate salt (C). These values are based on the total weight of the composition.

The polymeric compositions of the present disclosure have a combination of good impact strength and other mechanical properties. In particular, the addition of the sulfonate salt (C) results in an improved composition having a notched Izod impact strength that is from 1.1 times to about 10 times greater than the notched Izod impact strength of the base formulation of only polycarbonate (A) and mineral filler (B).

The composition may have a tensile modulus of at least 2.5 GPa when measured according to ISO 527; a notched Izod impact strength of from about 25 to about 90 kJ/m² when measured according to ISO 180 at room temperature and a thickness of 4 millimeters; a melt volume rate (MVR) of at least 5 cc/10 min when measured according to ISO 1133 at 260°C and a 5 kg load; and/or a ductility of at least 80% when measured according to ISO 6603 at a speed of 2.25 meters/second and a thickness of 3.2 millimeters at a temperature of 0°C. The composition may have any combination of these properties. It should be noted that some of the properties (e.g. notched Izod) are measured using articles made from the polymeric composition; however, such properties are described as belonging to the polymeric composition for ease of reference.

The polymeric composition has a tensile modulus of at least 2.5 GPa when measured according to ISO 527. In further embodiments, the tensile modulus is at least 3 GPa, at least 4 GPa, or from about 3 GPa to about 5.5 GPa, again when measured according to ISO 527.

The polymeric composition has a notched Izod impact strength of from about 25 to about 90 kJ/m² when measured according to ISO 180 at room temperature and a thickness of 4 millimeters. In further embodiments, the notched Izod impact strength is from about 45 to about 90 kJ/m² when measured according to ISO 180 at room temperature and a thickness of 4 millimeters.

The polymeric composition has a melt volume rate (MVR) of at least 5 grams/10 minutes when measured according to ISO 1133 at 260°C and a 5 kg load. In further embodiments, the MVR is from about 10 to about 35 cc/10 min, from about 7 to about 25 cc/10 min, or from about 15 to about 20 cc/10 min when measured according to ISO 1133 at 260°C and a 5 kg load.

The polymeric composition has a ductility of at least 80% when measured according to ISO 6603 at a speed of 2.25 meters/second and a thickness of 3.2 millimeters at a temperature of 0°C. In alternative embodiments, the ductility is at least 80% when measured according to ISO 6603 at a speed of 2.25 meters/second and a thickness of 3.2 millimeters at a temperature of 23°C (instead of 0°C). Sometimes, the measured ductility is at least 80% when measured at both 0°C and at 23°C.

In some embodiments, the polymeric composition has a tensile modulus of at least 3.0 GPa when measured according to ISO 527; and a notched Izod impact strength of from about 45 to about 90 kJ/m² when measured according to ISO 180 at room temperature and a thickness of 4 millimeters; and a ductility of at least 80% when measured according to ISO 6603 at a speed of 2.25 meters/second and a thickness of 3.2 millimeters at a temperature of 0°C.

In some embodiments, the polymeric composition has a tensile modulus of at least 3.0 GPa when measured according to ISO 527; a notched Izod impact strength of from about 25 to about 90 kJ/m² when measured according to ISO 180 at room temperature and a thickness of 4 millimeters; a ductility of at least 80% when measured according to ISO 6603 at a speed of 2.25 meters/second and a thickness of 3.2 millimeters at a temperature of 0°C; and a melt volume rate (MVR) of from about 15 to about 20 grams/10 minutes when measured according to ISO 1133 at 260°C and a 5 kg load.

In some embodiments, the polymeric composition has a tensile modulus of at least 3.0 GPa when measured according to ISO 527; a notched Izod impact strength of from about 30 to about 90 kJ/m² when measured according to ISO 180 at room temperature and a thickness of 4 millimeters; a ductility of at least 80% when measured according to ISO 6603 at a speed of 2.25 meters/second and a thickness of 3.2 millimeters at a temperature of 0°C; and a melt volume rate (MVR) of from about 15 to about 20 grams/10 minutes when measured according to ISO 1133 at 260°C and a 5 kg load.

In some embodiments, the polymeric composition has a tensile modulus of from at least 2.5 GPa to about 5.0 GPa when measured according to ISO 527; a notched Izod impact strength of from about 15 to about 55 kJ/m² when measured according to ISO 180 at room temperature and a thickness of 4 millimeters; a ductility of at least 80% when measured according to ISO 6603 at a speed of 2.25 meters/second and a thickness of 3.2 millimeters at a temperature of 0°C; and a melt volume rate (MVR) of from about 15 to about 25 grams/10 minutes when measured according to ISO 1133 at 260°C and a 5 kg load.

The polymeric composition may further comprise an impact modifier (D). The impact modifier may include an elastomer-modified graft copolymer comprising (i) an elastomeric (i.e., rubbery) polymer substrate having a glass transition temperature (Tg) less than about 10°C, more specifically less than about -10°C, or more specifically about -40°C to -80°C, and (ii) a rigid polymeric superstrate grafted to the elastomeric polymer substrate. As is known, elastomer-modified graft copolymers may be prepared by first providing the elastomeric polymer, then polymerizing the constituent monomer(s) of the rigid phase in the presence of the elastomer to obtain the graft copolymer. The grafts may be attached as graft branches or as shells to an elastomer core. The shell may merely physically encapsulate the core, or the shell may be partially or essentially completely grafted to the core.

Suitable materials for use as the elastomer phase include, for example, conjugated diene rubbers; copolymers of a conjugated diene with less than about 50 wt% of a copolymerizable monomer; olefin rubbers such as ethylene propylene copolymers (EPR) or ethylene-propylene-diene monomer rubbers (EPDM); ethylene-vinyl acetate rubbers; silicone rubbers; elastomeric C₁₋₈ alkyl (meth)acrylates; elastomeric copolymers of C₁₋₈ alkyl (meth)acrylates with butadiene and/or styrene; or combinations comprising at least one of the foregoing elastomers. As used herein, the terminology "(meth)acrylate monomers" refers collectively to acrylate monomers and methacrylate monomers.

Suitable conjugated diene monomers for preparing the elastomer phase are of formula (15): 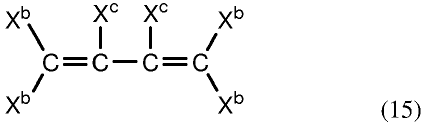 wherein each X^{b} is independently hydrogen, C₁-C₅ alkyl, or the like, and X^{c} is hydrogen. Examples of conjugated diene monomers that may be used are butadiene, isoprene, 1,3-heptadiene, methyl-1,3-pentadiene, 2,3-dimethyl-1,3-butadiene, 2-ethyl-1,3-pentadiene; 1,3-and 2,4-hexadienes, and the like, as well as mixtures comprising at least one of the foregoing conjugated diene monomers. Specific conjugated diene homopolymers include polybutadiene and polyisoprene.

Copolymers of a conjugated diene rubber may also be used, for example those produced by aqueous radical emulsion polymerization of a conjugated diene and one or more monomers copolymerizable therewith. Monomers that are suitable for copolymerization with the conjugated diene include monovinylaromatic monomers containing condensed aromatic ring structures, such as vinyl naphthalene, vinyl anthracene and the like, or monomers of formula (16): 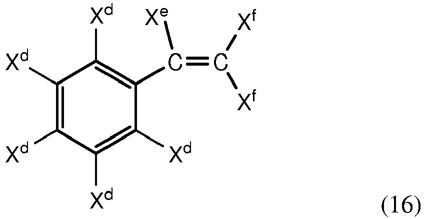 wherein each X^{d} is independently hydrogen, C₁-C₁₂ alkyl, C₃-C₁₂ cycloalkyl, C₆-C₁₂ aryl, C₇-C₁₂ aralkyl, C₇-C₁₂ alkaryl, C₁-C₁₂ alkoxy, C₃-C₁₂ cycloalkoxy, C₆-C₁₂ aryloxy, chloro, bromo, or hydroxy; X^{e} is hydrogen, C₁-C₅ alkyl, bromo, or chloro; and X^{f} is hydrogen. Examples of suitable monovinylaromatic monomers that may be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds. Styrene and/or alpha-methylstyrene may be used as monomers copolymerizable with the conjugated diene monomer.

Other monomers that may be copolymerized with the conjugated diene are monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (17): 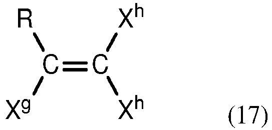 wherein R is hydrogen, C₁-C₅ alkyl, bromo, or chloro; X^{g} is cyano, C₁-C₁₂ alkoxycarbonyl, C₁-C₁₂ aryloxycarbonyl, hydroxy carbonyl, or the like; and X^{h} is hydrogen. Examples of monomers of formula (17) include acrylonitrile, ethacrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl

acrylate, ethyl acrylate, and 2-ethylhexyl acrylate are commonly used as monomers copolymerizable with the conjugated diene monomer. Mixtures of the foregoing monovinyl monomers and monovinylaromatic monomers may also be used.

Suitable (meth)acrylate monomers suitable for use as the elastomeric phase may be cross-linked, particulate emulsion homopolymers or copolymers of C₁₋₈ alkyl (meth)acrylates, in particular C₄₋₆ alkyl acrylates, for example n-butyl acrylate, t-butyl acrylate, n-propyl acrylate, isopropyl acrylate, 2-ethylhexyl acrylate, and the like, and combinations comprising at least one of the foregoing monomers. The C₁₋₈ alkyl (meth)acrylate monomers may optionally be polymerized in admixture with up to 15 wt% of comonomers of formulas (15), (16), or (17). Exemplary comonomers include but are not limited to butadiene, isoprene, styrene, methyl methacrylate, phenyl methacrylate, penethylmethacrylate, N-cyclohexylacrylamide, vinyl methyl ether or acrylonitrile, and mixtures comprising at least one of the foregoing comonomers. Optionally, up to 5 wt% a polyfunctional crosslinking comonomer may be present, for example divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

The elastomer phase may be polymerized by mass, emulsion, suspension, solution or combined processes such as bulk-suspension, emulsion-bulk, bulk-solution or other techniques, using continuous, semibatch, or batch processes. The particle size of the elastomer substrate is not critical. For example, an average particle size of about 0.001 to about 25 micrometers, specifically about 0.01 to about 15 micrometers, or even more specifically about 0.1 to about 8 micrometers may be used for emulsion based polymerized rubber lattices. A particle size of about 0.5 to about 10 micrometers, specifically about 0.6 to about 1.5 micrometers may be used for bulk polymerized rubber substrates. Particle size may be measured by simple light transmission methods or capillary hydrodynamic chromatography (CHDF). The elastomer phase may be a particulate, moderately cross-linked conjugated butadiene or C₄₋₆ alkyl acrylate rubber, and desirably has a gel content greater than 70%. Also suitable are mixtures of butadiene with styrene and/or C₄₋₆ alkyl acrylate rubbers.

The elastomeric phase may provide about 5 wt% to about 95 wt% of the total graft copolymer, more specifically about 20 wt% to about 90 wt%, and even more specifically about 40 wt% to about 85 wt% of the elastomer-modified graft copolymer, the remainder being the rigid graft phase.

The rigid phase of the elastomer-modified graft copolymer may be formed by graft polymerization of a mixture comprising a monovinylaromatic monomer and optionally one or more comonomers in the presence of one or more elastomeric polymer substrates. The above-described monovinylaromatic monomers of formula (16) may be used in the rigid graft phase, including styrene, alpha-methyl styrene, halostyrenes such as dibromostyrene, vinyltoluene, vinylxylene, butylstyrene, para-hydroxystyrene, methoxystyrene, or the like, or combinations comprising at least one of the foregoing monovinylaromatic monomers. Suitable comonomers include, for example, the above-described monovinylic monomers and/or monomers of the general formula (17). In one embodiment, R is hydrogen or C₁-C₂ alkyl, and X^{d} is cyano or C₁-C₁₂ alkoxycarbonyl. Specific examples of suitable comonomers for use in the rigid phase include acrylonitrile, ethacrylonitrile, methacrylonitrile, methyl (meth)acrylate, ethyl (meth)acrylate, n-propyl (meth)acrylate, isopropyl (meth)acrylate, and the like, and combinations comprising at least one of the foregoing comonomers.

The relative ratio of monovinylaromatic monomer and comonomer in the rigid graft phase may vary widely depending on the type of elastomer substrate, type of monovinylaromatic monomer(s), type of comonomer(s), and the desired properties of the impact modifier. The rigid phase may generally comprise up to 100 wt% of monovinyl aromatic monomer, specifically about 30 to about 100 wt%, more specifically about 50 to about 90 wt% monovinylaromatic monomer, with the balance being comonomer(s).

Depending on the amount of elastomer-modified polymer present, a separate matrix or continuous phase of ungrafted rigid polymer or copolymer may be simultaneously obtained along with the elastomer-modified graft copolymer. Typically, such impact modifiers comprise about 40 wt% to about 95 wt% elastomer-modified graft copolymer and about 5 wt% to about 65 wt% graft (co)polymer, based on the total weight of the impact modifier. In another embodiment, such impact modifiers comprise about 50 wt% to about 85 wt%, more specifically about 75 wt% to about 85 wt% rubber-modified graft copolymer, together with about 15 wt% to about 50 wt%, more specifically about 15 wt% to about 25 wt% graft (co)polymer, based on the total weight of the impact modifier.

Another specific type of elastomer-modified impact modifier comprises structural units derived from at least one silicone rubber monomer, a branched acrylate rubber monomer having the formula H₂C=C(R^{g})C(O)OCH₂CH₂R^{h}, wherein R^{g} is hydrogen or a C₁-C₈ linear or branched hydrocarbyl group and R^{h} is a branched C₃-C₁₆ hydrocarbyl group; a first graft link monomer; a polymerizable alkenyl-containing organic material; and a second graft link monomer. The silicone rubber monomer may comprise, for example, a cyclic siloxane, tetraalkoxysilane, trialkoxysilane, (acryloxy)alkoxysilane, (mercaptoalkyl)alkoxysilane, vinylalkoxysilane, or allylalkoxysilane, alone or in combination, e.g., decamethylcyclopentasiloxane, dodecamethylcyclohexasiloxane, trimethyltriphenylcyclotrisiloxane, tetramethyltetraphenylcyclotetrasiloxane, tetramethyltetravinylcyclotetrasiloxane, octaphenylcyclotetrasiloxane, octamethylcyclotetrasiloxane and/or tetraethoxysilane.

Exemplary branched acrylate rubber monomers include iso-octyl acrylate, 6-methyloctyl acrylate, 7-methyloctyl acrylate, 6-methylheptyl acrylate, and the like, alone or in combination. The polymerizable alkenyl-containing organic material may be, for example, a monomer of formula (16) or (17), e.g., styrene, alpha-methylstyrene, acrylonitrile, methacrylonitrile, or an unbranched (meth)acrylate such as methyl methacrylate, 2-ethylhexyl methacrylate, methyl acrylate, ethyl acrylate, n-propyl acrylate, or the like, alone or in combination.

The at least one first graft link monomer may be an (acryloxy)alkoxysilane, a (mercaptoalkyl)alkoxysilane, a vinylalkoxysilane, or an allylalkoxysilane, alone or in combination, e.g., (gamma-methacryloxypropyl)(dimethoxy)methylsilane and/or (3-mercaptopropyl)trimethoxysilane. The at least one second graft link monomer is a polyethylenically unsaturated compound having at least one allyl group, such as allyl methacrylate, triallyl cyanurate, or triallyl isocyanurate, alone or in combination.

The silicone-acrylate impact modifier compositions can be prepared by emulsion polymerization, wherein, for example at least one silicone rubber monomer is reacted with at least one first graft link monomer at a temperature from about 30°C to about 110°C to form a silicone rubber latex, in the presence of a surfactant such as dodecylbenzenesulfonic acid. Alternatively, a cyclic siloxane such as cyclooctamethyltetrasiloxane and a tetraethoxyorthosilicate may be reacted with a first graft link monomer such as (gamma-methacryloxypropyl)methyldimethoxysilane, to afford silicone rubber having an average particle size from about 100 nanometers to about 2 micrometers. At least one branched acrylate rubber monomer is then polymerized with the silicone rubber particles, optionally in the presence of a cross linking monomer, such as allylmethacrylate in the presence of a free radical generating polymerization catalyst such as benzoyl peroxide. This latex is then reacted with a polymerizable alkenyl-containing organic material and a second graft link monomer. The latex particles of the graft silicone-acrylate rubber hybrid may be separated from the aqueous phase through coagulation (by treatment with a coagulant) and dried to a fine powder to produce the silicone-acrylate rubber impact modifier composition. This method can be generally used for producing the silicone-acrylate impact modifier having a particle size from about 100 nanometers to about two micrometers.

Processes known for the formation of the foregoing elastomer-modified graft copolymers include mass, emulsion, suspension, and solution processes, or combined processes such as bulk-suspension, emulsion-bulk, bulk-solution or other techniques, using continuous, semibatch, or batch processes.

If desired, the foregoing types of impact modifiers may be prepared by an emulsion polymerization process that is free of basic materials such as alkali metal salts of C₆₋₃₀ fatty acids, for example sodium stearate, lithium stearate, sodium oleate, potassium oleate, and the like, alkali metal carbonates, amines such as dodecyl dimethyl amine, dodecyl amine, and the like, and ammonium salts of amines, or any other material, such as an acid, that contains a degradation catalyst. Such materials are commonly used as surfactants in emulsion polymerization, and may catalyze transesterification and/or degradation of polycarbonates. Instead, ionic sulfate, sulfonate or phosphate surfactants may be used in preparing the impact modifiers, particularly the elastomeric substrate portion of the impact modifiers. Suitable surfactants include, for example, C₁₋₂₂ alkyl or C₇₋₂₅ alkylaryl sulfonates, C₁₋₂₂ alkyl or C₇₋₂₅ alkylaryl sulfates, C₁₋₂₂ alkyl or C₇₋₂₅ alkylaryl phosphates, substituted silicates, and mixtures thereof. A specific surfactant is a C₆₋₁₆, specifically a C₈₋₁₂ alkyl sulfonate. This emulsion polymerization process is described and disclosed in various patents and literature of such companies as Rohm & Haas and SABIC Innovative Plastics (formerly General Electric Company). In the practice, any of the above-described impact modifiers may be used providing it is free of the alkali metal salts of fatty acids, alkali metal carbonates and other basic materials.

A specific impact modifier of this type is a methyl methacrylate-butadiene-styrene (MBS) impact modifier wherein the butadiene substrate is prepared using above-described sulfonates, sulfates, or phosphates as surfactants. Other exemplary elastomer-modified graft copolymers include acrylonitrile-butadiene-styrene (ABS), acrylonitrile-styrene-butyl acrylate (ASA), methyl methacrylate-acrylonitrile-butadiene-styrene (MABS), and acrylonitrile-ethylene-propylene-diene-styrene (AES).

In some embodiments, the impact modifier is a graft polymer having a high rubber content, i.e., greater than or equal to about 50 wt%, optionally greater than or equal to about 60 wt% by weight of the graft polymer. The rubber is desirably present in an amount less than or equal to about 95 wt%, optionally less than or equal to about 90 wt% of the graft polymer.

The rubber forms the backbone of the graft polymer, and is desirably a polymer of a conjugated diene of formula (15) wherein each X^{b} and X^{c} is independently hydrogen, C₁-C₅ alkyl, chlorine, or bromine. Examples of dienes that may be used are butadiene, isoprene, 1,3-hepta-diene, methyl-1,3-pentadiene, 2,3-dimethyl-1,3-butadiene, 2-ethyl-1,3-pentadiene; 1,3- and 2,4-hexadienes, chloro and bromo substituted butadienes such as dichlorobutadiene, bromobutadiene, dibromobutadiene, mixtures comprising at least one of the foregoing dienes, and the like. A desired conjugated diene is butadiene. Copolymers of conjugated dienes with other monomers may also be used, for example copolymers of butadiene-styrene, butadiene-acrylonitrile, and the like. Alternatively, the backbone may be an acrylate rubber, such as one based on n-butyl acrylate, ethylacrylate, 2-ethylhexylacrylate, mixtures comprising at least one of the foregoing, and the like. Additionally, minor amounts of a diene may be copolymerized in the acrylate rubber backbone to yield improved grafting.

After formation of the backbone polymer, a grafting monomer is polymerized in the presence of the backbone polymer. One desired type of grafting monomer is a monovinylaromatic hydrocarbon of formula (16) wherein X^{e} and X^{f} are independently hydrogen, C₁-C₅ alkyl, or the like; and X^{d} is hydrogen, C₁-C₁₀ alkyl, C₁-C₁₀ cycloalkyl, C₁-C₁₀ alkoxy, C₆-C₁₈ alkyl, C₆-C₁₈ aralkyl, C₆-C₁₈ aryloxy, chlorine, bromine, and the like. Examples include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, mixtures comprising at least one of the foregoing compounds, and the like.

A second type of grafting monomer that may be polymerized in the presence of the polymer backbone are acrylic monomers of formula (17) wherein X^{g} and X^{h} are independently hydrogen, C₁-C₅ alkyl, or the like; and R is cyano, C₁-C₁₂ alkoxycarbonyl, or the like. Examples of such acrylic monomers include acrylonitrile, ethacrylonitrile, methacrylonitrile, alpha-chloroacrylonitrile, beta-chloroacrylonitrile, alpha-bromoacrylonitrile, beta-bromoacrylonitrile, methyl acrylate, methyl methacrylate, ethyl acrylate, butyl acrylate, propyl acrylate, isopropyl acrylate, mixtures comprising at least one of the foregoing monomers, and the like.

A mixture of grafting monomers may also be used, to provide a graft copolymer. An example of a suitable mixture comprises a monovinylaromatic hydrocarbon and an acrylic monomer. Examples of graft copolymers suitable for use include, but are not limited to, acrylonitrile-butadiene-styrene (ABS) and methacrylonitrile-butadiene-styrene (MBS) resins. Suitable high-rubber acrylonitrile-butadiene-styrene resins are available from SABIC Innovative Plastics (formerly General Electric Company) as BLENDEX® grades 131, 336, 338, 360, and 415.

In particular embodiments, the impact modifier is a methacrylate-butadiene-styrene (MBS) polymer, an acrylonitrile-butadiene-styrene (ABS) polymer, an acrylic polymer, a grafted polymer, a block copolymer, or a core-shell impact modifier. In particular, a polycarbonate-polysiloxane copolymer, as previously described above, may be considered a block copolymer and an impact modifier. Exemplary polycarbonate-polysiloxane copolymers that can be used as an impact modifier in those offered under the trade name of LEXAN® EXL by SABIC Innovative Plastics.

The impact modifier may be from about 2 wt% to about 50 wt% of the composition. In more specific embodiments, the impact modifier is from about 3 wt% to about 20 wt% or from about 3.5 wt% to about 15 wt% of the composition. The resulting composition may have a rubber block content of from about 0.5 wt% to about 10 wt% of the composition.

The polymeric composition further comprises an acid stabilizer (E). The acid stabilizer neutralizes the basicity of the mineral filler (B). This reduces the amount of degradation of the polycarbonate polymer (A). The identity of the acid stabilizer is not particularly limited. Suitable acid stabilizers include acids, acid salts, esters of acids or their combinations. The addition of the acid or its salt or ester often deactivates catalytically active species such as alkali metals. Particularly useful classes of acids, acid salts and esters of acids are those derived from a phosphorous containing acid such as phosphoric acid, phosphorous acid, hypophosphorous acid, hypophosphoric acid, phosphinic acid, phosphonic acid, metaphosphoric acid, hexametaphosphoric acid, thiophosphoric acid, fluorophosphoric acid, difluorophosphoric acid, fluorophosphorous acid, difluorophosphorous acid, fluorohypophosphorous acid, fluorohypophosphoric acid or their combinations. In one embodiment a combination of a phosphorous containing acid and an ester of a phosphorous containing acid is used. Alternatively, acids, acid salts and esters of acids, such as, for example, sulphuric acid, sulphites, mono zinc phosphate, mono calcium phosphate, and the like, may be used. In particular embodiments, the acid stabilizer is phosphorous acid (H₃PO₃), phosphoric acid (H₃PO₄), mono zinc phosphate (Zn₃(PO₄)₂), mono sodium phosphate (NaH₂PO₄), or sodium acid pyrophosphate (Na₂H₂P₂O₇). The weight ratio of acid (E) to mineral filler (B) is from about 0.01 to about 0.05, including about 0.03.

The polymeric composition may further comprise a flow promoter (F). The flow promoter can lower the melt viscosity and better enable the polymeric composition to be formed into a thin-walled part using a molding process. Particularly useful are low molecular weight hydrocarbon resins derived from unsaturated C₅ to C₉ monomers. Exemplary commercial low molecular weight hydrocarbon resins may include the following: hydrocarbon resins available from Eastman Chemical under the trademark PICCOTAC; the fully hydrogenated alicyclic hydrocarbon resin based on C₉ monomers available from Arakawa Chemical Inc. under the trademark ARKON; the fully or partially hydrogenated hydrocarbon resin available from Eastman Chemical under the tradename REGALITE; and the hydrocarbon resins available from Exxon Chemical under the trade ESCOREZ. Other flow promoters include a styrene-acrylonitrile copolymer, poly(methyl methacrylate), a poly alpha-olefin, polyethylene glycol, polypropylene glycol, or a monomeric or oligomeric organophosphorus compound. Exemplary organophosphorous compounds include Bisphenol A Diphenyl Phosphate (BPADP), resorcinol bis diphenylphosphate (RDP), and triphenyl phosphate (TPP). In some embodiments, the flow promoter is selected from the group consisting of a styrene-acrylonitrile copolymer, poly(methyl methacrylate), a poly alpha-olefin, polyethylene glycol, and polypropylene glycol. In embodiments, the flow promoter is from about 1 wt% to about 30 wt% of the composition, including from about 10 wt% to about 30 wt% or from about 6 wt% to about 15 wt%.

Generally speaking, the polymeric compositions of the present disclosure should not be used for applications that require high flame retardance, as the addition of the sulfonate salt (C) affects flammability negatively. In particular embodiments, the polymeric composition preferably does not include any halogen-containing flame retardants. The polymeric composition desirably has low halogen content, i.e. less than 500 ppm halogen.

In some embodiments, the polymeric composition comprises from about 60 wt% to about 75 wt% of the polycarbonate (A); from about 8 wt% to about 20 wt% of the mineral filler (B); from about 0.5 wt% to about 2.5 wt% of the sulfonate salt (C); from about 3.5 wt% to about 15 wt% of an impact modifier (D); an acid stabilizer (E) in an amount so that the weight ratio of acid stabilizer to mineral filler is from about 0.01 to about 0.05; and from about 6 wt% to about 15 wt% of a flow promoter (F). These values are based on the total weight of the composition.

The polymeric composition may also include various additives such as stabilizers, colorants, and the like, with the proviso that the additives do not adversely affect the desired properties of the polymeric compositions. Mixtures of additives may be used. Such additives may be mixed at a suitable time during the mixing of the components for forming the polymeric composition.

The thermoplastic composition may comprise a primary antioxidant or "stabilizer" (e.g., a hindered phenol and/or secondary aryl amine) and, optionally, a secondary antioxidant (e.g., a phosphate and/or thioester). Suitable antioxidant additives include, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-teit-butyl-4-hydroxyphenyl)-propionic acid or the like, or combinations comprising at least one of the foregoing antioxidants. Antioxidants are generally used in amounts of about 0.01 to about 1 parts by weight, optionally about 0.05 to about 0.5 parts by weight, based on 100 parts by weight of the polymeric components of the polymeric composition.

Suitable heat stabilizer additives include, for example, organophosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations comprising at least one of the foregoing heat stabilizers. Heat stabilizers are generally used in amounts of about 0.01 to about 5 parts by weight, optionally about 0.05 to about 0.3 parts by weight, based on 100 parts by weight of the polymeric components of the polymeric composition..

Light stabilizers and/or ultraviolet light (UV) absorbing additives may also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers. Light stabilizers are generally used in amounts of about 0.01 to about 10 parts by weight, optionally about 0.1 to about 1 parts by weight, based on 100 parts by weight of the polymeric components of the polymeric composition.

Suitable UV absorbing additives include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than about 100 nanometers; or the like, or combinations comprising at least one of the foregoing UV absorbers. UV absorbers are generally used in amounts of about 0.1 to about 5 parts by weight, based on 100 parts by weight of the polymeric components of the polymeric composition.

Plasticizers, lubricants, and/or mold release agents additives may also be used. There is considerable overlap among these types of materials, which include, for example, phthalic acid esters such as dioctyl-4,5-epoxy-hexahydrophthalate; tris-(octoxycarbonylethyl)isocyanurate; tristearin; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax or the like. When present, such materials can be used in amounts of 0.001 to 1 percent by weight, specifically 0.01 to 0.75 percent by weight, more specifically 0.1 to 0.5 percent by weight of the polymeric components of the polymeric composition. A preferred mold release is penta erythritol tetra stearate (PETS).

Colorants such as pigment and/or dye additives may also be present. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates sulfates, chromates, or the like; carbon blacks; zinc ferrites; ultramarine blue; Pigment Brown 24; Pigment Red 101; Pigment Yellow 119; organic pigments such as azos, di-azos, quinacudones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Green 7, Pigment Yellow 147 and Pigment Yellow 150, or combinations comprising at least one of the foregoing pigments. Pigments are generally used in amounts of about 0.01 to about 10 parts by weight, based on 100 parts by weight of the polymeric components of the polymeric composition.

Shaped, formed, or molded articles comprising the polycarbonate compositions are also provided. The polycarbonate compositions may be molded into useful shaped articles by a variety of means such as injection molding, extrusion, rotational molding, blow molding and thermoforming to form various molded articles. Such articles may include a vehicle body panel, a vehicle interior panel, a vehicle instrument panel, a spoiler, a fairing, a vehicle interior trim part, a grill, a seat back, a piece of furniture, an office partition, a surfboards, a surgical cart, a tool or equipment housing, a medical device, or a toy. The polymeric compositions may be used for such applications as automotive panel and trim. Examples of suitable articles are exemplified by, but are not limited to, aircraft, automotive, truck, military vehicle (including automotive, aircraft, and water-borne vehicles), scooter, and motorcycle exterior and interior components, including panels, quarter panels, rocker panels, trim, fenders, doors, deck-lids, trunk lids, hoods, bonnets, roofs, bumpers, fascia, grilles, mirror housings, pillar appliques, cladding, body side moldings, wheel covers, hubcaps, door handles, spoilers, window frames, headlamp bezels, headlamps, tail lamps, tail lamp housings, tail lamp bezels, license plate enclosures, roof racks, and running boards; personal water-craft; jet-skis; pools; spas; hot tubs; steps; step coverings; building and construction applications such as glazing, roofs, windows, floors, decorative window furnishings or treatments; treated glass covers for pictures, paintings, posters, and like display items; wall panels, and doors; counter tops; protected graphics; outdoor and indoor signs; window and door trim; sports equipment; playground equipment; shoe laces; articles made from plastic-wood combinations; golf course markers; utility pit covers; cladding or seating for public transportation; cladding or seating for trains, subways, or buses; coated helmets and personal protective equipment; coated synthetic or natural textiles; coated painted articles; coated dyed articles; coated fluorescent articles; coated foam articles; and like applications. The present disclosure further contemplates additional fabrication operations on said articles, such as, but not limited to, molding, in-mold decoration, baking in a paint oven, lamination, and/or thermoforming. The articles may be used widely in automotive industry, home appliances, electrical components, and telecommunications.

The following examples are provided to illustrate the polycarbonate compositions, articles, and methods of the present disclosure. The examples are merely illustrative and are not intended to limit the disclosure to the materials, conditions, or process parameters set forth therein.

### EXAMPLES

The following materials were used in the Examples:

| Compound | Description | Mw | Trade name | Supplier |
|---|---|---|---|---|
| PC 1 | Polycarbonate | 30,500* | Lexan 105 | SABIC |
| PC 2 | Polycarbonate | 23,300* | Lexan 125 | SABIC |
| PC 3 | Polycarbonate | 21,800* | Lexan 175 | SABIC |
| PC-ST | PC copolymer of BPA/PDMS, 20% siloxane | 30,000* | EXL | SABIC |
| ABS | Emulsion polymerized ABS, 52% butadiene | | R333 | SABIC |
| BABS | Bulk polymerized ABS, 16% butadiene | | BABS | SABIC |
| MBS | Core-shell MBS, 75% butadiene | | EXL-2691A | Rohm & Haas |
| SAN 1 | Styrene-acrylonitrile copolymer, 25% acrylonitrile | | PolySAN 2537 | SABIC |
| SAN 2 | Styrene-acrylonitrile copolymer, 28% acrylonitrile | 105,000** | PolySAN 2856 | SABIC |
| Talc 1 | Magnesium silicate hydrate, 1.2 µm*** | | Jetfine 3CA | Luzenac |
| Talc 2 | Magnesium silicate hydrate, 5 µm*** | | Finntalc M 15 | Omya Inc. |
| Talc 3 | Magnesium silicate hydrate, 15 µm*** | | Finntalc M40 | Omya Inc. |
| Clay 1 | Aluminum silicate hydrate, 0.4 µm*** | | Polyfil HG-90 | KaMin LLC |
| Clay 2 | Aluminum silicate hydrate, calcined, 1.4 µm*** | | Translink 445 | BASF |
| Mica | Potassium aluminum silicate hydrate, 4 µm*** | | Aspanger Mica SFG20 | Quartzwerke |
| Wollastonite | Calcium metasilicate, coated, 5 µm*** | | Aspect 3000-1362 | Nyco |
| TiO₂ 1 | Titanium dioxide, 0.3 µm*** | | Kronos 2450 | Kronos |
| TiO₂2 | Titanium dioxide, coated, 0.3 µm*** | | Kronos CL220 | HCA |
| ZnS | Zinc sulfide, coated, 0.3 µm*** | | Sachtolith HD ZnS | Sachtleben |
| ZnO | Zinc oxide, 1-2 µm*** | | PW4 | PLDS |
| MgO | Magnesium oxide, 2.5 µm*** | | Remag AC | Spaeter GmbH |
| BaSO₄ | Synthetic barium sulfate, 8 µm*** | | Velvolux K3 | Sachtleben |
| BPADP | Bisphenol A diphosphate | | NcendX P-30 | Albemarle |
| H₃PO₃ | H₃PO₃ solution (45% in H₂O) | | phosphorous acid | Quaron |
| SAS | Sodium alkylsulfonate | | Atmer 191 | Croda |
| SDBS | Sodium dodecylbenzene sulfonate | | | Sigma Aldrich |
| PETS | Pentaerythritol tetrastearate, >90% esterified | | PETS G | Faci |
| Phosphite 1 | Tris(2,4-di-tert-butylphenyl)phosphite | | Irgafos 168 | Ciba |
| Phosphite 2 | Tris(nonylphenyl)phosphite | | phosphite GEP | Ciba |
| PELTP | Pentaerythritol tetrakis(3-laurylthiopropionate) | | Seenox 412 | Clariant |
| AO-1076 | Octadecyl-3-(3,5-di-t-butyl-4-hydroxyphenyl)propionate | | Irganox 1076 | Ciba |
| AO-1010 | Pentaerythritol tetrakis(3-(3,5-di-t-butyl-4-hydroxy-phenyl)propionate) | | Irganox 1010 | Ciba |

| | | | | |
|---|---|---|---|---|
| * Molecular weights in g/mol, measured by GPC according to a PC standard. ** Molecular weights in g/mol, measured by GPC according to a PS standard *** Approximate median particle size | | | | |

Testing of mechanical properties was performed as described below. All test samples were conditioned for 48 hours at 23°C before testing.

Coefficients of thermal expansion were determined in flow and cross-flow directions by Thermal Mechanical Analysis (TMA), scanning between -40°C and +40°C at a heating rate of 5°C/min.

For the flexural modulus and flexural strength, 3-point flexural data were measured on 4mm ISO bars, in accordance with the ISO 178 standard at 23°C.

Heat deflection temperatures were measured on 4mm Izod bars, in accordance with the ISO 75 standard in a flatwise manner under a load of 1.8MPa (A/f).

Izod impact measurements were performed on notched 3mm or 4mm Izod bars at various temperatures, in accordance with the ISO 180 standard with a 5.5 Joule hammer.

Multi-axial impact measurements were performed on 3.2mm flex plate samples at various temperatures, in accordance with the ISO 6603 standard at a speed of 2.25 m/s. Ductility was determined as the percentage of plaques that showed ductile failure (plaque is in one piece).

Melt viscosities were measured in accordance with the ISO 11443 standard at 260°C, 280°C or 300°C and various shear rates. The granules were dried for 4 hours at 100°C.

Melt volume rates were measured in accordance with the ISO 1133 standard at 260°C under a load of 5kg or at 300°C under a load of 1.2kg. The granules were dried for 4 hours at 100°C.

Polycarbonate molecular weights (PC Mw) were determined on pellets or parts (ISO tensile bars) by GPC using polystyrene standards.

SEM micrographs were recorded on a SEM XL30. Samples were cryo-fractured and coated with carbon before performing the microanalysis.

Tensile modulus and tensile strength tests were performed in accordance with the ISO 527 standard at a speed of 5 mm/min.

Vicat softening points were determined in accordance with the ISO 306 standard, under a 50N load at a heating rate of 120°C/hr (B120).

V0 flammability tests were performed in accordance with the UL94 standard, at varying thicknesses.

### EXAMPLE 1

Two blends, a reference blend R1 and an Example blend E1, were made to compare the effect of adding SAS. The compositions and results are shown in Table 1.

**Table 1.**

| | | | Unit | R1 | E1 |
|---|---|---|---|---|---|
| PC 1 (high Mw) | | | % | 60 | 59 |
| PC 3 (low Mw) | | | % | 6.71 | 6.71 |
| SAN 1 | | | % | 9.5 | 9.5 |
| MBS | | | % | 4.4 | 4.4 |
| Talc 1 (1.2 µm) | | | % | 18 | 18 |
| H₃PO₃ | | | % | 0.54 | 0.54 |
| SAS | | | % | | 1 |
| PETS | | | % | 0.25 | 0.25 |
| Phosphite 1 | | | % | 0.1 | 0.1 |
| PELTP | | | % | 0.25 | 0.25 |
| AO-1076 | | | % | 0.25 | 0.25 |
| MVR | 260°C/5kg | | cc/10 min | 7.2 | 10.0 |
| MV | 280°C/1500s⁻¹ | | Pa·s | 340 | 312 |
| Vicat | B120 | | °C | 141 | 140 |
| INI | 23°C | Impact | kJ/m² | 8.4 | 31.5 |
| MAI | 23°C | Ductility | % | 80 | 100 |
| | 0°C | Ductility | % | 0 | 100 |
| Tensile | 5 mm/min | Modulus | GPa | 4.6 | 4.4 |
| | | Strength | MPa | 63.0 | 56.8 |
| | | Elongation | % | 7 | 13 |

The results in Table 1 show that the Izod notched impact was dramatically improved. Multi-axial impact ductility at both 23°C and 0°C also showed a significant improvement. The MVR also increased, which shows an improvement in flow properties. The tensile modulus changed minimally and still maintained a good value over 4 GPa.

### EXAMPLES 2-4

One reference blends and three Example blends were used to determine the effect of the addition of SAS into polycarbonate, both with and without talc filler. The results of these experiments can be seen in Table 2.

**Table 2.**

| | | | Unit | R2 | E2 | E3 | E4 |
|---|---|---|---|---|---|---|---|
| PC 1 (high Mw) | | | % | 50 | 49 | 44.85 | 43.85 |
| PC 3 (low Mw) | | | % | 50 | 49 | 44.85 | 43.85 |
| Talc 1 (1.2 µm) | | | % | | | 10 | 10 |
| +H₃PO₃ | | | % | | | 0.3 | 0.3 |
| SAS | | | % | | 2 | | 2 |
| MVR | 260°C/5kg/4' | | cc/10 min | 16.9 | 70.6 | 15.3 | 13.7 |
| | 260°C/5kg/18' | | cc/10 min | 16.3 | 89.1 | 15.7 | 13.8 |
| | | Retention | % | 97% | 126% | 102% | 101% |
| MV | 280°C/1500s⁻¹ | | Pa·s | 335 | 68 | 289 | 254 |
| Vicat | B120 | | °C | 142 | 135 | 142 | 142 |
| INI | 23°C | Impact | kJ/m2 | 10.7 | 11.7 | 6.9 | 48.8 |
| | 0°C | Impact | kJ/m² | 10.1 | 10.2 | 7.0 | 16.9 |
| | -30°C | Impact | kJ/m² | 9.0 | 10.0 | 6.9 | 12.9 |
| MAI | 23°C | Ductility | % | 100 | 80 | 100 | 100 |
| | 0°C | Ductility | % | 100 | 20 | 10 | 100 |
| | -10°C | Ductility | % | 100 | 0 | 0 | 100 |
| | -20°C | Ductility | % | 100 | 0 | 20 | 80 |
| | -30°C | Ductility | % | 93 | 0 | 0 | 80 |
| Tensile | 5 mm/min | Modulus | GPa | 2.4 | 2.4 | 3.5 | 3.3 |
| | | Strength | MPa | 67.2 | 59.5 | 64.3 | 64.9 |
| | | Elongation | % | 101 | 44 | 93 | 102 |
| Flexural | | Modulus | Gpa | 2.4 | 2.3 | 3.4 | 3.2 |
| | | Strength | MPa | 96.3 | 91.9 | 102.0 | 92.3 |
| PC Mw | Pellets | | kg/mol | 51.2 | 42.0 | 50.5 | 51.4 |
| | Parts | | kg/mol | 51.2 | 34.9 | 48.5 | 50.7 |
| | | Retention | % | 99% | 83% | 94% | 99% |

SAS used in absence of talc (E2) caused severe PC degradation, as reflected in the too-high MVR and slightly lower Vicat. However, the SAS by itself did not seem to have any effect on the tensile modulus, and there was a small improvement in the impact strength. As the SAS is almost pH neutral (pH 7-8), the degradation is likely to be caused by the presence of Na⁺ ions, which can catalyze polycarbonate degradation.

When only talc was used (E3), the impact properties deteriorated and the tensile modulus increased compared to R2, as expected.

When the SAS was used in combination with acid-neutralized talc (E4), no polycarbonate degradation took place as reflected in the MVR values. However, the impact strength was greatly improved, with the improvement being more than 4x the reference R2 at 23°C and 1.6x at 0°C. This improvement in impact strength was not expected. The addition of talc typically reduces the impact strength of the composition. However, comparing E4 to R2 here, the added talc actually increased the impact strength. This type of behavior was very unexpected.

Since both the SAS and the talc are somewhat basic, it is not likely that this increased stability is due to dual neutralization. Rather, there must be some kind of interaction between the SAS and the talc. This interaction seemed to also result in quite a large improvement in impact strength and a slight decrease in tensile modulus.

Since the SAS is a surface active component with a polar head and a non-polar tail, it is likely that the sodium alkylsulfonate coordinates with the -OH groups on the surface of the polar talc particle. The SAS thus forms a barrier between the basic talc surface and the polycarbonate matrix, and at the same time the sodium ions are coordinated in this complex rather than being able to move freely in the polycarbonate matrix. This might explain the reduced polycarbonate degradation caused by both components (as reflected in the % retention of PC Mw).

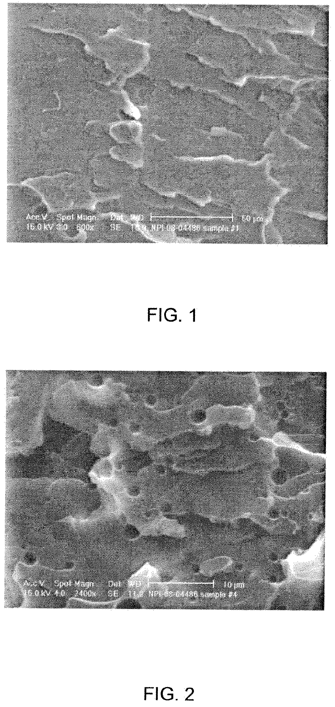

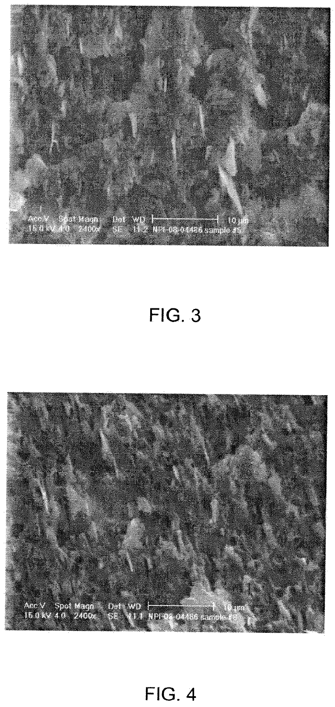

FIGs. 1-4 are SEM micrographs of R2, E2, E3, and E4, respectively. FIG. 1 showed no morphological features. Upon addition of SAS as seen in FIG. 2, small round holes started appearing in the matrix. This could be related to gas bubble formation upon degradation of the polycarbonate. In FIG. 3, the talc particles clearly appeared as flat disk-shaped particles, partly sticking out of the fractured surface. There was a stark difference with the SEM micrograph in FIG. 4, where the sample contained both talc and SAS. There were big holes in the matrix at the surface, where the talc particles seemed to have fallen out. This was a clear indication for reduced filler-matrix adhesion. In combination with the mechanical results, the SEM micrographs showed that the talc attained a non-bonding character due to the SAS coordination upon its surface. This non-binding character resulted in improved impact strength and reduced tensile modulus.

### EXAMPLES 5-14

Addition of acid to talc can reduce the polycarbonate degradation effect. The optimum level for neutralization of talc was previously found to be 0.03 wt% acid for every 1 wt% of talc. Because the SAS apparently reduced polycarbonate degradation through interaction with the talc, it was possible that the presence of SAS would shift the optimum level of acid, or that there was some interaction between the acid and the SAS itself. Twelve Example blends (E5-E16) were made out to determine the optimum acid to talc ratio and/or optimum acid to SAS ratio. The results are shown in Tables 3A and 3B.

**Table 3A.**

| | | | Unit | E5 | E6 | E7 | E8 | E9 | E10 |
|---|---|---|---|---|---|---|---|---|---|
| PC 1 (high Mw) | | | % | 37.55 | 37.5 | 37.45 | 37.4 | 37.35 | 37.3 |
| PC 3 (low Mw) | | | % | 37.55 | 37.5 | 37.45 | 37.4 | 37.35 | 37.3 |
| SAN 1 | | | % | 9.5 | 9.5 | 9.5 | 9.5 | 9.5 | 9.5 |
| MBS | | | % | 4.4 | 4.4 | 4.4 | 4.4 | 4.4 | 4.4 |
| Talc 1 (1.2 µm) | | | % | 10 | 10 | 10 | 10 | 10 | 10 |
| H₃PO₃ | | | % | | 0.1 | 0.2 | 0.3 | 0.4 | 0.5 |
| SAS | | | % | 1 | 1 | 1 | 1 | 1 | 1 |
| MVR | 260°C, 5kg, 4' | | cc/10 min | 22.7 | 19.3 | 18.7 | 18.8 | 19.6 | 20.0 |
| | 260°C, 5kg, 18' | | cc/10 min | 26.5 | 23.3 | 20.8 | 19.5 | 20.3 | 22.6 |
| | | Retention | % | 117% | 121% | 111% | 104% | 104% | 113% |
| MV | 280°C/1500 s⁻¹ | | Pa·s | 133 | 148 | 142 | 144 | 150 | 148 |
| Vicat | B120 | | °C | 136 | 137 | 138 | 138 | 138 | 137 |
| INI | 23°C | Impact | kJ/m² | 8.6 | 27.5 | 38.3 | 38.3 | 37.4 | 38.7 |
| | 0°C | Impact | kJ/m² | 8.3 | 12.5 | 15.9 | 17.4 | 15.9 | 16.7 |
| MAI | 23°C | Ductility | % | 60 | 100 | 100 | 100 | 80 | 100 |
| | 0°C | Ductility | % | 0 | 100 | 100 | 100 | 100 | 100 |
| | -30°C | Ductility | % | 0 | 0 | 80 | 60 | 60 | 20 |
| Tensile | 5 mm/min | Modulus | GPa | 3.4 | 3.5 | 3.4 | 3.3 | 3.3 | 3.3 |
| | | Elongation | % | 39 | 77 | 87 | 91 | 89 | 93 |
| PC Mw | | Raws | kg/mol | 51.8 | 51.8 | 51.8 | 51.8 | 51.8 | 51.8 |
| | | Pellets | kg/mol | 48.2 | 49.8 | 50.2 | 49.4 | 49.9 | 49.3 |
| | | Parts | kg/mol | 41.4 | 46.9 | 48.5 | 48.8 | 48.7 | 48.4 |
| | 110°C, 140hrs | Hydro-aged parts | kg/mol | 38.0 | 40.3 | 40.4 | 39.0 | 36.8 | 34.8 |

**Table 3B.**

| | | | Unit | R5 | R6 | E11 | E12 | E13 | E14 |
|---|---|---|---|---|---|---|---|---|---|
| PC 1 (high Mw) | | | % | 49.5 | 49.35 | 46.925 | 46.85 | 39.35 | 39.2 |
| PC 3 (low Mw) | | | % | 49.5 | 49.35 | 46.925 | 46.85 | 39.35 | 39.2 |
| Talc 1 (1.2 µm) | | | % | | | 5 | 5 | 20 | 20 |
| H₃PO₃ | | | % | | 0.3 | 0.15 | 0.3 | 0.3 | 0.6 |
| SAS | | | % | 1 | 1 | 1 | 1 | 1 | 1 |
| Acid:talc ratio | | | % | NA | NA | 3 | 6 | 1.5 | 3 |
| MVR | 260°C, 5kg, 4' | | cc/10 min | 51.7 | 35.3 | 13.4 | 17.6 | 14.9 | 11.4 |
| | 260°C, 5kg, 18' | | cc/10 min | 61.7 | 50.4 | 13.5 | 19.1 | 18.3 | 12.1 |
| | | Retention | % | 120% | 143% | 101% | 109% | 122% | 106% |
| MV | 280°C/1500 s⁻¹ | | Pa·s | 100 | 104 | 341 | 238 | 250 | 342 |
| Vicat | B120 | | °C | 137 | 136 | 143 | 140 | 140 | 143 |
| INI | 23°C | Impact | kJ/m2 | 12.7 | 8.8 | 51.6 | 17.4 | 6.8 | 25.9 |
| | 0°C | Impact | kJ/m2 | 10.6 | 8.8 | 17.0 | 13.6 | 6.5 | 11.9 |
| MAI | 23°C | Ductility | % | 100 | 100 | 100 | 100 | 100 | 100 |
| | 0°C | Ductility | % | 80 | 100 | 100 | 100 | 20 | 100 |
| | -30°C | Ductility | % | 20 | | 60 | 40 | 0 | 40 |
| Tensile | 5 mm/min | Modulus | GPa | 2.4 | 2.4 | 2.8 | 2.8 | 5.0 | 4.6 |
| | | Elongation | % | 99 | 95 | 72 | 117 | 116 | 5 |
| PC Mw | | Raws | kg/mol | 51.8 | 51.8 | 51.8 | 51.8 | 51.8 | 51.8 |
| | | Pellets | kg/mol | 42.1 | 46.5 | 51.9 | 50.4 | 49.0 | 51.0 |
| | | Retention pellets | % | 81% | 90% | 100% | 97% | 95% | 98% |
| | | Parts | kg/mol | 37.5 | 41.2 | 50.9 | 48.6 | 44.9 | 49.8 |
| | | Retention parts | % | 72% | 80% | 98% | 94% | 87% | 96% |

In Table 3A, the PC Mw retention for pellets and parts was stabilized at an acid:talc ratio of 0.02-0.03 and at higher acid levels no further improvement or reduction can be seen. However, bars hydro-aged in the autoclave for 140 hours at 110°C, showed a clear optimum around 1%-2%. The improved PC Mw retention was also reflected in improved impact strength and tensile elongation values.

The results in Table 3B indicated that the acid:talc ratio is significant, rather than the SAS:talc ratio. R6 showed that combining acid with SAS and no talc did not prevent degradation, as reflected in the decreased MVR and impact strength. The slight increase in PC Mw retention can be ascribed to the neutralization of the slightly basic (pH 7-8) SAS, but the main degradation is caused by the presence of Na⁺ ions.

The blends that contained either too high (E12) or too low (E13) an acid:talc ratio showed degradation, especially as seen in the PC Mw retention for parts and decreased impact strength compared to E11 and E14. Since all samples contained 1% SAS, this leads to the conclusion that it is the interaction with talc, rather than SAS, that is important.

### EXAMPLES 15-23

Several different blends were made to determine the significance of the SAS loading, its dependence on talc loading, and the resulting effect on impact strength. The results are shown in Tables 4A and 4B.

**Table 4A.**

| | | | Unit | R15 | R16 | R17 | R18 | R19 | E15 | E16 | E17 |
|---|---|---|---|---|---|---|---|---|---|---|---|
| PC 1 (high Mw) | | | % | 50 | 49.75 | 49.5 | 49 | 47.43 | 47.3 | 47.18 | 46.93 |
| PC 3 (low Mw) | | | % | 50 | 49.75 | 49.5 | 49 | 47.43 | 47.3 | 47.18 | 46.93 |
| Talc 1 (1.2 µm) | | | % | | | | | 5 | 5 | 5 | 5 |
| H₃PO₃ | | | % | | | | | 0.15 | 0.15 | 0.15 | 0.15 |
| SAS | | | % | | 0.5 | 1 | 2 | | 0.25 | 0.5 | 1 |
| MVR | 260°C/5kg/4' | | cc/10 min | 16.9 | 30.6 | 51.7 | 70.6 | 15.0 | 17.4 | 17.5 | 15.5 |
| | 260°C/5kg/18' | | cc/10 min | 16.3 | 32.9 | 61.7 | 89.1 | 15.2 | 17.7 | 17.4 | 15.8 |
| | | Retention | % | 97% | 107% | 120% | 126% | 101% | 102% | 99% | 102% |
| MV | 280°C/ 1500s^{- 1} | | Pa·s | 335 | 182 | 100 | 68 | 308 | 295 | 268 | 289 |
| Vicat | B120 | | °C | 142 | 140 | 137 | 135 | 142 | 141 | 142 | 143 |
| INI | 23°C | Impact | kJ/m² | 10.7 | 10.7 | 12.7 | 11.7 | 9.1 | 11.3 | 13.9 | 34.7 |
| | 0°C | Impact | kJ/m² | 10.1 | 9.9 | 10.6 | 10.2 | 8.9 | 10.7 | 11.7 | 14.5 |
| | -30°C | Impact | kJ/m² | 9.0 | 9.5 | 9.3 | 10.0 | 8.6 | 9.4 | 9.3 | 11.5 |
| MAI | 23°C | Ductility | % | 100 | 100 | 100 | 80 | 100 | 100 | 100 | 100 |
| | 0°C | Ductility | % | 100 | 100 | 80 | 20 | 100 | 100 | 100 | 100 |
| | -10°C | Ductility | % | 100 | 80 | 20 | 0 | 100 | 100 | 100 | 100 |
| | -20°C | Ductility | % | 100 | 80 | 40 | 0 | 40 | 50 | 70 | 100 |
| | -30°C | Ductility | % | 93 | 40 | 20 | 0 | 0 | 0 | 60 | 67 |
| Tensile | 5 mm/min | Modulus | GPa | 2.4 | 2.4 | 2.4 | 2.4 | 2.9 | 2.9 | 2.9 | 2.8 |
| | | Elongation | % | 101 | 106 | 95 | 44 | 103 | 87 | 101 | 107 |
| Flexural | | Modulus | GPa | 2.4 | 2.3 | 2.3 | 2.3 | 2.8 | 2.8 | 2.8 | 2.7 |
| | | Strength | MPa | 96.3 | 96.3 | 93.9 | 91.9 | 94.9 | 95.9 | 94.1 | 93.3 |
| PC Mw | Pellets | | kg/mol | 51.2 | 42.1 | 42.0 | 49.6 | 51.1 | 50.5 | 50.4 | 51.4 |
| | Parts | | kg/mol | 51.2 | 37.5 | 34.9 | 42.7 | 50.6 | 49.6 | 50.1 | 50.9 |
| | | Retention | % | 99% | 86% | 89% | 83% | 98% | 96% | 97% | 98% |

**Table 4B.**

| | | | Unit | R20 | E18 | E19 | E20 | R21 | E21 | E22 | E23 |
|---|---|---|---|---|---|---|---|---|---|---|---|
| PC 1 (high Mw) | | | % | 44.8 5 | 44.6 | 44.3 5 | 43.8 5 | 39.7 | 39.2 | 38.7 | 37.7 |
| PC 3 (low Mw) | | | % | 44.8 5 | 44.6 | 44.3 5 | 43.8 5 | 39.7 | 39.2 | 38.7 | 37.7 |
| Talc 1 (1.2 µm) | | | % | 10 | 10 | 10 | 10 | 20 | 20 | 20 | 20 |
| H₃PO₃ | | | % | 0.3 | 0.3 | 0.3 | 0.3 | 0.6 | 0.6 | 0.6 | 0.6 |
| SAS | | | % | | 0.5 | 1 | 2 | | 1 | 2 | 4 |
| MVR | 260°C/5kg/4' | | cc/10 min | 15.3 | 13.7 | 14.0 | 13.7 | 16.4 | 12.3 | 14.0 | 17.4 |
| | 260°C/5kg/1 8' | | cc/10 min | 15.7 | 13.9 | 13.5 | 13.8 | 18.4 | 13.4 | 15.2 | 26.8 |
| | | Retention | % | 102 % | 101 % | 97% | 101 % | 112 % | 109 % | 108 % | 154 % |
| MV | 280°C/1500s⁻¹ | | Pa·s | 289 | 330 | 315 | 254 | 235 | 280 | 195 | 119 |
| Vicat | B120 | | °C | 142 | 142 | 142 | 142 | 139. 3 | 143. 0 | 141. 6 | 138. 8 |
| INI | 23°C | Impact | kJ/m² | 6.9 | 32.1 | 47.0 | 48.8 | 5.5 | 24.3 | 19.1 | 15.7 |
| | 0°C | Impact | kJ/m² | 7.0 | 15.4 | 14.6 | 16.9 | 4.7 | 12.7 | 12.3 | 10.4 |
| | -30°C | Impact | kJ/m² | 6.9 | 11.7 | 11.2 | 12.9 | 5.7 | 10.0 | 9.3 | 8.9 |
| MAI | 23°C | Ductility | % | 100 | 100 | 100 | 100 | 0 | 100 | 100 | 100 |
| | 0°C | Ductility | % | 10 | 100 | 100 | 100 | 0 | 100 | 100 | 80 |
| | -10°C | Ductility | % | 0 | 100 | 100 | 100 | 0 | 100 | 50 | 0 |
| | -20°C | Ductility | % | 20 | 100 | 93 | 80 | 0 | 90 | 50 | 0 |
| | -30°C | Ductility | % | 0 | 100 | 40 | 80 | 0 | 60 | 20 | 0 |
| Tensile | 5 mm/min | Modulus | GPa | 3.5 | 3.3 | 3.4 | 3.3 | 5.1 | 4.6 | 4.6 | 4.4 |
| | | Elongation | % | 93 | 113 | 78 | 102 | 4 | 33 | 15 | 7 |
| Flexural | | Modulus | Gpa | 3.4 | 3.3 | 3.3 | 3.2 | 4.9 | 4.5 | 4.4 | 4.2 |
| | | Strength | MPa | 102. 0 | 96.7 | 95.5 | 92.3 | 112. 3 | 101. 1 | 97.6 | 91.7 |
| PC Mw | Pellets | | kg/mol | 50.5 | 51.2 | 51.0 | 51.4 | 49.2 | 50.7 | 50.1 | 50.0 |
| | Parts | | kg/mol | 48.5 | 50.9 | 50.2 | 50.7 | 44.5 | 49.8 | 48.9 | 47.4 |
| | | Retention | % | 94% | 99% | 97% | 99% | 86% | 96% | 94% | 92% |

For all three talc levels, the optimum SAS content appeared to be around 1 wt% or 2 wt%. Examples E17, E19, E20, and E21 had the best impact strength values, ductility, and retention of molecular weight. Example E23 showed that these properties were reduced upon addition of more SAS.

### EXAMPLES 24-25

Two blends were made to test the effect of the structure of the sulfonate salt on the impact strength. Example E24 used sodium alkylsulfonate (SAS), while Examples E25 used sodium dodecylbenzene sulfonate (SDBS).

Here, as indicated by the asterisks (*), Izod impact measurements were performed on notched 3.2mm Izod bars at 23°C, in accordance with the ASTM D256 standard with a 5 lbf/ft hammer. Multi-axial impact measurements were performed on 3.2mm flex plate samples at various temperatures, in accordance with the ASTM D3763 standard at a speed of 3.3 m/s. Ductility was determined as the percentage of plaques that showed ductile failure (plaque is in one piece). The results are seen in Table 5.

**Table 5.**

| | | | Unit | R24 | E24 | E25 |
|---|---|---|---|---|---|---|
| PC 1 (high Mw) | | | % | 48.18 | 48.19 | 48.19 |
| PC 3 (low Mw) | | | % | 22.72 | 21.71 | 21.71 |
| SAN 1 | | | % | 9.5 | 9.5 | 9.5 |
| MBS | | | % | 4.4 | 4.4 | 4.4 |
| Talc 1 (1.2µm) | | | % | 15 | 15 | 15 |
| MZP | | | % | 0.2 | 0.2 | 0.2 |
| SAS | | | % | | 1 | |
| SDBS | | | % | | | 1 |
| MVR | 260°C, 5kg, 4' | | cc/10 min | 9.5 | 14.2 | 14.7 |
| | 260°C, 5kg, 18' | | cc/10 min | 9.9 | 16.9 | 17.5 |
| | | Retention | % | 104% | 119% | 119% |
| HDT | A/f | | °C | 121.5 | 120.9 | 119.3 |
| INI | 23°C | Impact | kJ/m² | 22.7 | 55.5 | 52.2 |
| | 0°C | Impact | kJ/m² | 10.6 | 45.9 | 42.9 |
| | 23°C | Ductility | % | 0 | 100 | 100 |
| | 0°C | Ductility | % | 0 | 100 | 100 |
| INI* | 23°C | Impact | J/m | 183 | 576 | 523 |
| | | Ductility | % | 100 | 100 | 100 |
| MAI* | 23°C | Impact | J | 58 | 58 | 57 |
| | | Ductility | % | 100 | 100 | 100 |
| Tensile | 5 mm/min | Modulus | GPa | 4.4 | 3.8 | 4.2 |
| | | Elongation | % | 87 | 101 | 95 |
| Flexural | | Modulus | GPa | 4.0 | 3.7 | 4.0 |
| | | Strength | MPa | 101.6 | 95.5 | 97.7 |
| CTE | Flow | | µm/(m-°C) | 4.1 | 4.4 | 4.2 |
| | Cross-flow | | µm/(m-°C) | 9.3 | 9.7 | 9.2 |

Both the SDBS and the SAS improved the INI and MVR quite dramatically at the cost of some stiffness. The loss in tensile modulus and flexural strength was much smaller for the SDBS than for SAS.

The coefficient of linear thermal expansion (CTE) was determined in both flow and x-flow directions. For some applications, it is crucial that the CTE is as low as possible, such as car body panels to allow for closer gaps in the car design. The CTE was somewhat affected by the addition of SAS or SDBS, but remained very low in flow direction and higher in cross-flow direction. These numbers can be easily correlated to the reduction in reinforcing effect.

### EXAMPLES 26-32

Several blends were made to test the influence of the talc loading on the impact strength. The results are shown in Tables 6A and 6B.

**Table 6A.**

| | | | Unit | R26 | R27 | R28 | R29 | R30 |
|---|---|---|---|---|---|---|---|---|
| PC 1 (high Mw) | | | % | 50 | 47.43 | 44.85 | 42.28 | 39.7 |
| PC 3 (low Mw) | | | % | 50 | 47.43 | 44.85 | 42.28 | 39.7 |
| Talc 1 (1.2µm) | | | % | | 5 | 10 | 15 | 20 |
| H₃PO₃ | | | % | | 0.15 | 0.3 | 0.45 | 0.6 |
| SAS | | | % | | | | | |
| MVR | 260°C, 5kg, 4' | | cc/10' | 16.9 | 15.7 | 15.3 | 16.8 | 16.4 |
| | 260°C, 5kg, 18' | | cc/10' | 16.3 | 16.4 | 15.7 | 18.3 | 18.4 |
| | | Retention | % | 97% | 104% | 102% | 109% | 112% |
| MV | 280°C/1500s⁻¹ | | Pa·s | 335 | 296 | 289 | 222 | 235 |
| Vicat | B120 | | °C | 142 | 142 | 142 | 139 | 139 |
| INI | 23°C | Impact | kJ/m² | 10.7 | 8.8 | 6.9 | 6.0 | 5.5 |
| | 0°C | Impact | kJ/m² | 10.1 | 8.7 | 7.0 | 6.0 | 4.7 |
| | -30°C | Impact | kJ/m² | 9.0 | 8.5 | 6.9 | 5.9 | 5.7 |
| MAI | 23°C | Ductility | % | 100 | 100 | 100 | 0 | 0 |
| | 0°C | Ductility | % | 100 | 100 | 10 | 0 | 0 |
| | -10°C | Ductility | % | 100 | 90 | 0 | 0 | 0 |
| | -20°C | Ductility | % | 100 | 50 | 20 | 0 | 0 |
| | -30°C | Ductility | % | 93 | 0 | 0 | 0 | 0 |
| Tensile | 5 mm/min | Modulus | GPa | 2.4 | 2.9 | 3.5 | 4.4 | 5.1 |
| | | Elongation | °70 | 101 | 99 | 93 | 7 | 4 |
| Flexural | | Modulus | Gpa | 2.4 | 2.8 | 3.4 | 4.2 | 4.9 |
| | | Strength | MPa | 96.3 | 97.0 | 102.0 | 107.0 | 112.3 |
| PC Mw | | Pellets | kg/mol | 51.3 | 51.0 | 50.5 | 48.3 | 49.2 |
| | | Parts | kg/mol | 51.2 | 50.6 | 48.5 | 45.5 | 44.5 |
| | | Retention | % | 99% | 98% | 94% | 88% | 86% |

**Table 6B.**

| | | | Unit | R31 | E26 | E27 | E28 | E29 | E30 | E31 | E32 |
|---|---|---|---|---|---|---|---|---|---|---|---|
| PC 1 (high Mw) | | | % | 49.5 | 48.9 9 | 48.4 7 | 47.9 6 | 46.9 3 | 44.3 5 | 41.7 8 | 39.2 |
| PC 3 (low Mw) | | | % | 49.5 | 48.9 9 | 48.4 7 | 47.9 6 | 46.9 3 | 44.3 5 | 41.7 8 | 39.2 |
| Talc 1 (1.2µm) | | | % | | 1 | 2 | 3 | 5 | 10 | 15 | 20 |
| H₃PO₃ | | | % | | 0.03 | 0.06 | 0.09 | 0.15 | 0.3 | 0.45 | 0.6 |
| SAS | | | % | 1 | 1 | 1 | 1 | 1 | 1 | 1 | 1 |
| MVR | 260°C, 5kg, 4' | | cc/10 min | 51.7 | 19.1 | 18.7 | 18.0 | 15.5 | 14.0 | 12.3 | 12.3 |
| | 260°C, 5kg, 18' | | cc/10 min | 61.7 | 18.4 | 18.3 | 17.5 | 15.8 | 13.5 | 13.0 | 13.4 |
| | | Retention | % | 120 % | 96% | 98% | 97% | 102 % | 97% | 106 % | 109 % |
| MV | 280°C/1500 s⁻¹ | | Pa·s | 100 | 193 | 215 | 221 | 289 | 315 | 325 | 280 |
| Vicat | B120 | | °C | 137 | 142 | 142 | 143 | 143 | 142 | 142 | 143 |
| INI | 23°C | Impact | kJ/m² | 12.7 | 14.2 | 13.4 | 15.6 | 34.7 | 47.0 | 37.0 | 24.3 |
| | 0°C | Impact | kJ/m² | 10.6 | 12.0 | 11.7 | 12.7 | 14.5 | 14.6 | 15.3 | 12.7 |
| | -30°C | Impact | kJ/m² | 9.3 | 10.5 | 10.2 | 10.5 | 11.5 | 11.2 | 12.1 | 10.0 |
| MAI | 23°C | Ductility | % | 100 | 100 | 100 | 100 | 100 | 100 | 100 | 100 |
| | 0°C | Ductility | % | 80 | 100 | 100 | 100 | 100 | 100 | 100 | 100 |
| | -10°C | Ductility | % | 20 | 100 | 100 | 100 | 100 | 100 | 100 | 100 |
| | -20°C | Ductility | % | 40 | 100 | 100 | 100 | 100 | 93 | 100 | 90 |
| | -30°C | Ductility | % | 20 | 80 | 40 | 100 | 67 | 40 | 100 | 60 |
| Tensile | 5 mm/min | Modulus | GPa | 2.4 | 2.5 | 2.6 | 2.6 | 2.8 | 3.4 | 3.8 | 4.6 |
| | | Elongation | % | 95 | 105 | 103 | 101 | 107 | 78 | 53 | 33 |
| Flexural | | Modulus | GPa | 2.3 | 2.5 | 2.5 | 2.6 | 2.7 | 3.2 | 3.7 | 4.5 |
| | | Strength | MPa | 93.9 | 93.0 | 92.9 | 92.2 | 93.3 | 95.5 | 96.8 | 101. 1 |
| PC Mw | | Pellets | kg/mol | 42.1 | 50.7 | 50.8 | 50.7 | 51.4 | 51.0 | 51.0 | 50.7 |
| | | Parts | kg/mol | 37.5 | 50.5 | 50.2 | 50.5 | 50.9 | 50.2 | 50.4 | 49.8 |
| | | Retention | % | 72% | 97% | 97% | 98% | 98% | 97% | 97% | 96% |

The data showed that the presence of both SAS and talc cancelled out the degradation enhancement that these additives have individually on PC. It was evident that for all amounts of talc, the presence of SAS improved the impact strength and ductility (compare R27-R30 to E29-32). Also, for all talc levels, the impact strength was higher than the control reference R26. It was remarkable that talc seemed to act as an impact modifier when combined with SAS. The optimum level of talc for impact improvement was in the 5-15 wt% range. The fact that the blends containing 15-20 wt% talc were ductile at minus 20°C or even minus 30°C was also a unique feature.

One trade-off for using the SAS was the somewhat lower tensile modulus, as the filler is now less effective for reinforcement. However, the improved impact strength allowed for the use of a higher talc level. For instance, R28 contained 10% talc and had a tensile modulus of 3.5 GPa. To obtain the same tensile modulus, a blend containing 10-15 wt% talc in combination with SAS could be used (see E30 and E31). However, the blend would have a greater impact strength and would be ductile down to minus 30°C, while R28 is brittle even at 0°C.

### EXAMPLES 33-35

The talc particle size was varied to determine its significance. The results are shown in Table 7.

**Table 7.**

| | | | | R33 | E33 | R34 | E34 | R35 | E35 |
|---|---|---|---|---|---|---|---|---|---|
| | | | Unit | 1 micron | | 5 micron | | 15 micron | |
| PC 1 (high Mw) | | | % | 44.85 | 44.35 | 44.85 | 44.35 | 44.85 | 44.35 |
| PC 3 (low Mw) | | | % | 44.85 | 44.35 | 44.85 | 44.35 | 44.85 | 44.35 |
| Talc 1 (1.2µm) | | | % | 10 | 10 | | | | |
| Talc 2 (5µm) | | | % | | | 10 | 10 | | |
| Talc 3 (15µm) | | | % | | | | | 10 | 10 |
| H₃PO₃ | | | % | 0.3 | 0.3 | 0.3 | 0.3 | 0.3 | 0.3 |
| SAS | | | % | | 1 | | 1 | | 1 |
| MVR | 260°C, 5kg, 4' | | cc/10 min | 15.3 | 14.0 | 13.4 | 13.9 | 12.9 | 14.1 |
| | 260°C, 5kg, 18' | | cc/10 min | 15.7 | 13.5 | 13.7 | 14.5 | 13.5 | 15.9 |
| | | Retention | % | 102% | 97% | 102% | 104% | 104% | 112% |
| MV | 280°C/ 1500s⁻¹ | | Pa·s | 289 | 315 | 285 | 289 | 328 | 267 |
| Vicat | B120 | | °C | 142 | 142 | 144 | 143 | 144 | 143 |
| INI | 23°C | Impact | kJ/m² | 6.9 | 47.0 | 6.5 | 12.5 | 6.9 | 10.1 |
| | 0°C | Impact | kJ/m² | 7.0 | 14.6 | 6.1 | 10.1 | 6.2 | 8.6 |
| | -30°C | Impact | kJ/m² | 6.9 | 11.2 | 6.0 | 8.2 | 5.7 | 7.3 |
| MAI | 23°C | Ductility | % | 100 | 100 | 100 | 100 | 100 | 100 |
| | 0°C | Ductility | % | 10 | 100 | 0 | 100 | 0 | 100 |
| | -10°C | Ductility | % | 0 | 100 | 0 | 100 | 0 | 0 |
| | -20°C | Ductility | % | 20 | 93 | 0 | 100 | 0 | 0 |
| | -30°C | Ductility | % | 0 | 40 | 0 | 0 | 0 | 0 |
| Tensile | 5 mm/min | Modulus | GPa | 3.5 | 3.4 | 3.2 | 3.1 | 3.2 | 3.1 |
| | | Elongation | % | 93 | 78 | 73 | 104 | 21 | 60 |
| PC Mw | | Pellets | kg/mol | 50.5 | 51.0 | 51.8 | 51.6 | 51.7 | 51.8 |
| | | Parts | kg/mol | 48.5 | 50.2 | 51.2 | 51.7 | 51.4 | 49.9 |
| | | Retention | % | 94% | 97% | 99% | 100% | 99% | 96% |

Smaller particles have a larger surface area relative to the weight of the particle. As the SAS plays predominantly an interfacial role, it was expected that this effect would be stronger for small particle sizes. As the surface area also plays a role in polycarbonate degradation caused by the basicity of talc, it was unclear whether the acid:talc ratio might need to be changed depending on particle size either.

For all particle sizes, improvement in impact strength was seen, and the best improvement was obtained for the smallest particle size, as predicted. Without SAS, the impact strengths were very similar. However, only for the smallest particle size was the improvement in Izod notched impact strength significant (almost 7x).

### EXAMPLES 36-47

Several blends were made with different mineral fillers. It should be noted that not all minerals had the same particle size or surface treatment. In all cases a concentration of 10% was us, although in some instances this may far exceed the commonly used level for the particular mineral filler. The results are shown in Tables 8A and 8B.

**Table 8A.**

| | | | Unit | R35 | R36 | E36 | R37 | E37 | R38 | E38 | R39 | E39 | E40 |
|---|---|---|---|---|---|---|---|---|---|---|---|---|---|
| PC 1 (high Mw) | | | % | 50 | 44.85 | 44.35 | 45 | 44.5 | 45 | 44.5 | 45 | 44.5 | 45 |
| PC 3 (low Mw) | | | % | 50 | 44.85 | 44.35 | 45 | 44.5 | 45 | 44.5 | 45 | 44.5 | 45 |
| Talc 1 (1.2µm) | | | % | | 10 | 10 | | | | | | | |
| H₃PO₃ | | | % | | 0.3 | 0.3 | | | | | | | |
| Clay 1 (0.4µm | | | % | | | | 10 | 10 | | | | | |
| Clay 2 (1.4µm); calcined | | | % | | | | | | 10 | 10 | | | |
| Mica (4µm | | | % | | | | | | | | 10 | 10 | |
| Wollastonite (5µm | | | % | | | | | | | | | | 10 |
| SAS | | | % | | | 1 | | 1 | | 1 | | 1 | 1 |
| MVR | 260°C, 5kg, 4' | | cc/ 10 min | 16.9 | 15.3 | 14.0 | 40.8 | 14.4 | 17.1 | 14.5 | 18.8 | 14.9 | 23.8 |
| | 260°C, 5kg,18' | | cc/ 10 min | 16.3 | 15.7 | 13.5 | 43.6 | 15.7 | 19.8 | 16.7 | 21.4 | 16.5 | 36.7 |
| | | Retention | % | 97 | 102 | 97 | 107 | 109 | 116 | 115 | 114 | 111 | 154 |
| MV | 280°C/ 1500s⁻¹ | | Pa·s | 335 | 289 | 315 | 133 | 301 | 296 | 310 | 265 | 296 | 201 |
| Vicat | B120 | | °C | 142 | 142 | 142 | 135 | 141 | 140 | 141 | 140 | 141 | 139 |
| INI | 23°C | Impact | kJ/m² | 10.7 | 6.9 | 47.0 | 5.2 | 47.1 | 6.3 | 6.5 | 5.3 | 9.4 | 7.6 |
| | 0°C | Impact | kJ/m² | 10.1 | 7.0 | 14.6 | 5.2 | 23.4 | 6.2 | 6.5 | 5.4 | 8.2 | 7.3 |
| | -30°C | Impact | kJ/m² | 9.0 | 6.9 | 11.2 | 5.0 | 15.1 | 5.7 | 4.9 | 5.5 | 6.9 | 7.1 |
| MAI | 23°C | Ductility | % | 100 | 100 | 100 | 0 | 100 | 0 | 80 | 0 | 100 | 0 |
| | 0°C | Ductility | % | 100 | 10 | 100 | 0 | 100 | 0 | 0 | 0 | 0 | 0 |
| | -10°C | Ductility | % | 100 | 0 | 100 | 0 | 100 | 0 | 0 | 0 | 0 | |
| | -20°C | Ductility | % | 100 | 20 | 93 | 0 | 100 | 0 | 0 | 0 | 0 | |
| | -30°C | Ductility | % | 93 | 0 | 40 | 0 | 100 | 0 | 0 | 0 | 0 | |
| Tensile | 5 mm/min | Modulus | GPa | 2.4 | 3.5 | 3.4 | 2.9 | 2.9 | 2.8 | 3.3 | 3.1 | 2.8 | 3.6 |
| | | Elongation | % | 101 | 93 | 78 | 100 | 83 | 98 | 57 | 86 | 17 | 77 |
| PC Mw | | Pellets | kg/mol | 51.3 | 50.5 | 51.0 | 42.9 | 51.7 | 50.4 | 51.8 | 49.4 | 51.6 | 46.8 |
| | | Parts | kg/mol | 51.2 | 48.5 | 50.2 | 39.6 | 50.6 | 48.7 | 49.9 | 48.0 | 49.2 | 41.0 |
| | | Retention | % | 99 | 94 | 97 | 77 | 98 | 94 | 96 | 93 | 95 | 79 |

**Table 8B.**

| | | | Unit | E41 | R4 2 | E42 | R4 3 | E43 | R4 4 | E44 | R4 5 | E45 | R4 6 | E46 |
|---|---|---|---|---|---|---|---|---|---|---|---|---|---|---|
| PC 1 (high Mw) | | | % | 44. 5 | 45 | 44. 5 | 45 | 44. 5 | 45 | 44. 5 | 45 | 44. 5 | 45 | 44. 5 |
| PC 3 (low Mw) | | | % | 44. 5 | 45 | 44. 5 | 45 | 44. 5 | 45 | 44. 5 | 45 | 44. 5 | 45 | 44. 5 |
| TiO₂ 1 (0.3µm) | | | % | 10 | | | | | | | | | | |
| TiO₂ 2 (0.3 µm); coated | | | % | | 10 | 10 | | | | | | | | |
| ZnS (0.3 µm) | | | % | | | | 10 | 10 | | | | | | |
| ZnO (1-2 µm) | | | % | | | | | | 10 | 10 | | | | |
| MgO (2.5 µm) | | | % | | | | | | | | 10 | 10 | | |
| BaSO₄ (8 µm) | | | % | | | | | | | | | | 10 | 10 |
| SAS | | | % | 1 | | 1 | | 1 | | 1 | | 1 | | 1 |
| MVR | 260°C, 5kg, 4' | | cc/10 min | 16. 5 | 15. 7 | 16. 5 | 34. 7 | 17. 4 | 47. 4 | 35. 9 | | | 14. 3 | 37. 4 |
| | 260°C, 5kg, 18' | | cc/10 min | 19. 2 | 17. 0 | 20. 6 | 41. 5 | 22. 2 | 95. 6 | 40. 3 | | | 15. 1 | 38. 9 |
| | | Retention | % | 116 | 108 | 125 | 119 | 128 | 202 | 112 | | | 106 | 104 |
| MV | 280°C/ 1500s⁻¹ | | Pa·s | 292 | 324 | 258 | 149 | 162 | 68 | 166 | | | 360 | 184 |
| Vicat | B120 | | °C | 140 | 141 | 140 | 136 | 140 | 134 | 138 | | | 141 | 138 |
| INI | 23°C | Impact | kJ/m² | 12. 7 | 8.7 | 43. 3 | 6.5 | | 5.7 | 8.8 | | | 9.1 | 8.4 |
| | 0°C | Impact | kJ/m² | 11. 4 | 8.2 | 19. 4 | 7.0 | 13. 3 | 5.9 | 8.8 | | | 8.2 | 7.9 |
| | -30°C | Impact | kJ/m² | 9.2 | 7.8 | 12. 8 | 6.7 | 10. 8 | | 8.2 | | | 7.7 | 7.4 |
| MAI | 23°C | Ductility | % | 100 | 100 | 100 | 100 | 100 | 0 | 100 | | | 100 | 100 |
| | 0°C | Ductility | % | 100 | 100 | 100 | 100 | 100 | 0 | 100 | | | 60 | 0 |
| | -10°C | Ductility | % | 100 | 100 | 100 | 40 | 100 | | 40 | | | 0 | 0 |
| | -20°C | Ductility | % | 100 | 100 | 100 | 0 | 100 | | 0 | | | 0 | 0 |
| | -30°C | Ductility | % | 100 | 100 | 100 | 0 | 100 | | 0 | | | 0 | 0 |
| Tensile | 5 mm/min | Modulus | GPa | 2.6 | 2.6 | 2.6 | 2.8 | 2.6 | 2.7 | 2.6 | | | 2.6 | 2.5 |
| | | Elongation | % | 93 | 100 | 95 | 54 | 84 | 2 | 51 | | | 98 | 75 |
| PC Mw | | Pellets | kg/mol | 51. 9 | 51. 7 | 51. 6 | 45. 0 | 51. 1 | 45. 1 | 44. 8 | **18. 7** | **19. 7** | 51. 9 | 43. 8 |
| | | Parts | kg/mol | 49. 9 | 51. 1 | 48. 4 | 42. 1 | 46. 1 | 27. 9 | 40. 4 | | | 51. 3 | 40. 6 |
| | | Retention | % | 96 | 99 | 94 | 81 | 89 | 54 | 78 | | | 99 | 78 |

Generally, polycarbonate degradation was reduced upon addition of SAS, as evidenced by a higher impact strength compared to the reference blend without SAS. The two exceptions were wollastonite (E40) and BaSO₄ (E46). In the case of wollastonite, the level of degradation was similar when no SAS was added (data not shown). The BaSO₄ blend (E46) exhibited polycarbonate degradation only in the presence of SAS, as evidenced by the increased MVR, decrease in impact strength, and poor PC Mw retention.

The combination of talc and SAS (E36) had an improvement of almost 7x the impact strength, while the combination of clay and SAS (E37) had an improvement of more than 9x the impact strength of their respective reference. The two best-performing mineral fillers were talc and clay.

The calcined clay (E38) performed much worse than the regular clay (E37). The smaller particle size for the regular clay might partly account for this difference, but the impact performance of the calcined clay was considerably worse compared to talc of a comparable particle size (E36). Mica (E39) performed fairly similar to calcined clay, even though the mica particle size was much bigger.

For the reference samples for ZnS (R43) and ZnO (R44), extensive degradation occurred, as evidenced by poor PC Mw retention. The SAS addition only partly prevented this degradation. For MgO (R45, E45) the degradation was so severe that no parts could be molded.

In Table 8C, acid was also added to the ZnS blend. The results are shown below.

**Table 8C.**

| | | | Unit | R43 | E43 | R47 | E47 |
|---|---|---|---|---|---|---|---|
| PC 1 (high Mw) | | | % | 45 | 44.5 | 45 | 44.5 |
| PC 3 (low Mw) | | | % | 45 | 44.5 | 45 | 44.5 |
| ZnS (0.3µm) | | | % | 10 | 10 | 10 | 10 |
| H₃PO₃ | | | % | | | 0.03 | 0.03 |
| SAS | | | % | | 1 | | 1 |
| MVR | 260°C, 5kg, 4' | | cc/10 min | 34.7 | 17.4 | 17.1 | 17.5 |
| | 260°C, 5kg, 18' | | cc/10 min | 41.5 | 22.2 | 17.9 | 19.0 |
| | | Retention | % | 119 | 128 | 104 | 109 |
| MV | 280°C/ 1500s⁻¹ | | Pa·s | 149 | 162 | 242 | 225 |
| Vicat | B120 | | °C | 136 | 140 | 142 | 142 |
| INI | 23°C | Impact | kJ/m² | 6.5 | | 6.4 | 51.7 |
| | 0°C | Impact | kJ/m² | 7.0 | 13.3 | 6.6 | 42.9 |
| | -30°C | Impact | kJ/m² | 6.7 | 10.8 | 6.8 | 23.7 |
| | 23°C | Ductility | % | 0 | | 0 | 100 |
| | 0°C | Ductility | % | 0 | 0 | 0 | 0 |
| | -30°C | Ductility | % | 0 | 0 | 0 | 0 |
| MAI | 23°C | Impact | J | 109 | 118 | 123 | 130 |
| | 0°C | Impact | J | 113 | 109 | 122 | 125 |
| | -10°C | Impact | J | 102 | 105 | 114 | 122 |
| | -20°C | Impact | J | 99 | 95 | 104 | 118 |
| | -30°C | Impact | J | 102 | 105 | 99 | 114 |
| | 23°C | Ductility | % | 100 | 100 | 100 | 100 |
| | 0°C | Ductility | % | 100 | 100 | 100 | 100 |
| | -10°C | Ductility | % | 40 | 100 | 100 | 100 |
| | -20°C | Ductility | % | 0 | 100 | 100 | 100 |
| | -30°C | Ductility | % | 0 | 100 | 0 | 100 |
| Tensile | 5 mm/min | Modulus | GPa | 2.8 | 2.6 | 2.6 | 2.5 |
| | | Elongation | % | 54 | 84 | 99 | 104 |
| PC Mw | | Pellets | kg/mol | 45.0 | 51.1 | 49.7 | 50.4 |
| | | Parts | kg/mol | 42.1 | 46.1 | 48.8 | 47.8 |
| | | Retention | % | 81% | 89% | 94% | 92% |

The acid-containing blend (E47) had good MVR, improved impact strength (by 8x), good ductility, and acceptable degradation.

### EXAMPLES 48-57

Blends containing talc, SAS, and different impact modifiers were made. In a first set of experiments, the effect of SAS addition to a talc-filled blend containing a polycarbonate-polysiloxane copolymer (PC-ST) impact modifier was evaluated. The results are shown in Table 9A. There was little advantage to adding the SAS because only at the highest talc level was the impact strength improved, and only by about 1.4x.

**Table 9A.**

| | | | Unit | R48a | R48b | E48 | R49 | E49 | R50 | E50 | E51 |
|---|---|---|---|---|---|---|---|---|---|---|---|
| PC 1 (high Mw) | | | % | 40 | 37.5 | 37 | 35 | 34.5 | 30 | 29.5 | 29 |
| PC 3 (low Mw) | | | % | 40 | 37.5 | 37 | 35 | 34.5 | 30 | 29.5 | 29 |
| PC-ST | | | % | 20 | 20 | 20 | 20 | 20 | 20 | 20 | 20 |
| Talc 1 (1.2µm) | | | % | | 5 | 5 | 10 | 10 | 20 | 20 | 20 |
| H₃PO₃ | | | % | | 0.15 | 0.15 | 0.3 | 0.3 | 0.6 | 0.6 | 0.6 |
| SAS | | | % | | | 1 | | 1 | | 1 | 2 |
| Vicat | B120 | | °C | 145 | 145 | 145 | 145 | 145 | 144 | 146 | 145 |
| INI (3mm) | 23°C | Impact | kJ/m² | 71.4 | 68.1 | 63.2 | 56.5 | 58.6 | 29.6 | 41.4 | 44.2 |
| | 10°C | Impact | kJ/m² | 71.4 | 65.8 | 63.3 | 51.0 | 53.6 | 22.9 | 36.8 | 40.4 |
| | 0°C | Impact | kJ/m² | 68.5 | 58.0 | 62.7 | 44.0 | 50.9 | 15.4 | 32.1 | 34.9 |
| | -10°C | Impact | kJ/m² | 68.2 | 52.6 | 57.1 | 26.2 | 45.9 | 13.0 | 26.4 | 29.0 |
| | -20°C | Impact | kJ/m² | 63.4 | 31.4 | 46.1 | 19.8 | 34.8 | 11.8 | 16.9 | 20.7 |
| | -30°C | Impact | kJ/m² | 64.2 | 21.4 | 25.1 | 16.8 | 20.7 | 11.5 | 14.3 | 15.6 |
| | -40°C | Impact | kJ/m² | 62.5 | 15.2 | 22.2 | 16.3 | 18.7 | 11.0 | 13.6 | 13.3 |
| Tensile | 5 mm/min | Modulus | GPa | 2.1 | 2.5 | 2.4 | 2.9 | 2.8 | 3.8 | 3.6 | 3.6 |
| | | Elongation | % | 116 | 94 | 103 | 94 | 100 | 13 | 31 | 42 |

Besides PC-ST, a few other types of impact modifier (IM) were tested in combination with the talc and SAS, namely: emulsion acrylnonitrile-butadiene-styrene (ABS), Bulk ABS and methacrylate-butadiene-styrene (MBS), some of which were tested in combination with styrene-acrylonitrile (SAN). In all examples (except the last set with only SAN) the rubber level was kept constant at around 3% for the final blend. When SAN is added, the total amount of IM + SAN was always equal to 20%:

| | Impact modifier | | Blend | |
|---|---|---|---|---|
| | rubber type | rubber content [%] | IM level [%] | rubber level [%] |
| PC-ST | Siloxane | 20 | 15 | 3.0 |
| ABS | Butadiene | 50 | 6 | 3.0 |
| BABS | Butadiene | 16 | 20 | 3.2 |
| MBS | Butadiene | 75 | 4 | 3.0 |

The results for these experiments are listed in Tables 9B, 9C, and 9D.

**Table 9B.**

| | | | Unit | R52a | R52b | E52 | R53a | R53b | E53 |
|---|---|---|---|---|---|---|---|---|---|
| PC 1 (high Mw) | | | % | 42.5 | 37.35 | 36.85 | 40 | 34.85 | 34.35 |
| PC 3 (low Mw) | | | % | 42.5 | 37.35 | 36.85 | 40 | 34.85 | 34.35 |
| PC-ST | | | % | 15 | 15 | 15 | | | |
| SAN | | | % | | | | 14 | 14 | 14 |
| ABS | | | % | | | | 6 | 6 | 6 |
| BABS | | | % | | | | | | |
| MBS | | | % | | | | | | |
| Talc 1 (1.2µm) | | | % | | 10 | 10 | | 10 | 10 |
| H₃PO₃ | | | % | | 0.3 | 0.3 | | 0.3 | 0.3 |
| SAS | | | % | | | 1 | | | 1 |
| MVR | 260°C, 5kg | | cc/10 min | 12.5 | 11.2 | 10.8 | 17.2 | 12.5 | 13.0 |
| MV | 280°C/1500s⁻¹ | | Pa·s | 348 | 261 | 265 | 180 | 175 | 161 |
| Vicat | B120 | | °C | 142 | 141 | 142 | 138 | 138 | 137 |
| INI | 23°C | Impact | kJ/m² | 66.4 | 47.6 | 60.8 | 53.1 | 8.8 | 33.0 |
| | 0°C | Impact | kJ/m² | 63.1 | 18.0 | 42.2 | 47.1 | 8.3 | 13.9 |
| | -30°C | Impact | kJ/m² | 51.3 | 15.1 | 18.4 | 21.9 | 7.6 | 10.1 |
| MAI | 23°C | Ductility | % | 100 | 100 | 100 | 100 | 100 | 100 |
| | 0°C | Ductility | % | 100 | 100 | 100 | 100 | 100 | 100 |
| | -10°C | Ductility | % | 100 | 100 | 100 | 100 | 60 | 100 |
| | -20°C | Ductility | % | 100 | 100 | 100 | 100 | 0 | 80 |
| | -30°C | Ductility | % | 100 | 100 | 100 | 100 | 0 | 20 |
| Tensile | 5 mm/min | Modulus | GPa | 2.2 | 3.1 | 3.0 | 2.3 | 3.5 | 3.4 |
| | | Elongation | % | 95 | 98 | 93 | 102 | 79 | 80 |
| PC Mw | | Pellets | kg/mol | 53.8 | 53.4 | 53.1 | 51.7 | 51.6 | 51.2 |
| | | Parts | kg/mol | 53.6 | 52.8 | 52.7 | 51.1 | 50.9 | 49.9 |
| | | Retention | % | 100% | 99% | 99% | 99% | 99% | 97% |
| | Hydro-aged | Parts | kg/mol | 30.8 | 36.9 | 26.9 | 19.4 | 25.0 | 26.0 |
| | | Retention | % | 57% | 69% | 51% | 38% | 48% | 51% |

**Table 9C.**

| | | | Unit | R54a | R54b | E54 | R55a | R55b | E55 |
|---|---|---|---|---|---|---|---|---|---|
| PC 1 (high Mw) | | | % | 40 | 34.85 | 34.35 | 48 | 42.85 | 42.35 |
| PC 3 (low Mw) | | | % | 40 | 34.85 | 34.35 | 48 | 42.85 | 42.35 |
| PC-ST | | | % | | | | | | |
| SAN | | | % | | | | | | |
| ABS | | | % | | | | | | |
| BABS | | | % | 20 | 20 | 20 | | | |
| MBS | | | % | | | | 4 | 4 | 4 |
| Talc 1 (1.2µm) | | | % | | 10 | 10 | | 10 | 10 |
| H₃PO₃ | | | % | | 0.3 | 0.3 | | 0.3 | 0.3 |
| SAS | | | % | | | 1 | | | 1 |
| MVR | 260°C, 5kg | | cc/10 min | 20.0 | 14.2 | 15.0 | 12.5 | 8.4 | 9.2 |
| MV | 280°C/1500s⁻¹ | | Pa·s | 164 | 180 | 163 | 359 | 391 | 378 |
| Vicat | B120 | | °C | 137 | 137 | 136 | 144 | 145 | 144 |
| INI | 23°C | Impact | kJ/m² | 53.2 | 15.2 | 38.7 | 55.8 | 18.2 | 51.1 |
| | 0°C | Impact | kJ/m² | 49.5 | 10.7 | 22.4 | 53.9 | 12.2 | 24.2 |
| | -30°C | Impact | kJ/m² | 27.2 | 8.7 | 10.2 | 21.2 | 10.9 | 15.5 |
| MAI | 23°C | Ductility | % | 100 | 100 | 100 | 100 | 100 | 100 |
| | 0°C | Ductility | % | 100 | 100 | 100 | 100 | 100 | 100 |
| | -10°C | Ductility | % | 100 | 80 | 100 | 100 | 100 | 100 |
| | -20°C | Ductility | % | 100 | 0 | 100 | 100 | 80 | 100 |
| | -30°C | Ductility | % | 100 | 0 | 80 | 100 | 0 | 100 |
| Tensile | 5 mm/min | Modulus | GPa | 2.3 | 3.3 | 3.3 | 2.2 | 3.2 | 3.2 |
| | | Elongation | % | 116 | 80 | 86 | 107 | 108 | 111 |
| PC Mw | | Pellets | kg/mol | 51.1 | 51.9 | 51.4 | 52.2 | 53.1 | 53.0 |
| | | Parts | kg/mol | 48.8 | 51.2 | 50.2 | 52.1 | 52.4 | 52.7 |
| | | Retention | % | 96% | 99% | 98% | 100% | 99% | 99% |
| | Hydro-aged | Parts | kg/mol | 37.0 | 34.8 | 35.7 | 44.1 | 37.3 | 36.6 |
| | | Retention | % | 72% | 67% | 69% | 84% | 70% | 69% |

**Table 9D.**

| | | | Unit | R56a | R56b | E56 | R57a | R57b | E57 |
|---|---|---|---|---|---|---|---|---|---|
| PC 1 (high Mw) | | | % | 40 | 34.85 | 34.35 | 45 | 39.85 | 39.35 |
| PC 3 (low Mw) | | | % | 40 | 34.85 | 34.35 | 45 | 39.85 | 39.35 |
| PC-ST | | | % | | | | | | |
| SAN | | | % | 16 | 16 | 16 | 10 | 10 | 10 |
| ABS | | | % | | | | | | |
| BABS | | | % | | | | | | |
| MBS | | | % | 4 | 4 | 4 | | | |
| Talc 1 (1.2µm) | | | % | | 10 | 10 | | 10 | 10 |
| H₃PO₃ | | | % | | 0.3 | 0.3 | | 0.3 | 0.3 |
| SAS | | | % | | | 1 | | | 1 |
| MVR | 260°C, 5kg | | cc/10 min | 19.4 | 14.3 | 15.4 | 19.6 | 15.6 | 16.2 |
| MV | 280°C/1500s⁻¹ | | Pa·s | 161 | 183 | 170 | 213 | 212 | 206 |
| Vicat | B120 | | °C | 139 | 138 | 138 | 141 | 141 | 141 |
| INI | 23°C | Impact | kJ/m² | 56.3 | 10.7 | 34.1 | 8.7 | 6.6 | 11.3 |
| | 0°C | Impact | kJ/m² | 26.7 | 9.4 | 13.0 | 7.7 | 6.4 | 9.5 |
| | -30°C | Impact | kJ/m² | 17.5 | 8.2 | 9.7 | 6.8 | 6.6 | 9.2 |
| MAI | 23°C | Ductility | % | 100 | 100 | 100 | 100 | 100 | 100 |
| | 0°C | Ductility | % | 100 | 100 | 100 | 25 | 100 | 100 |
| | -10°C | Ductility | % | 100 | 80 | 100 | 60 | 100 | 100 |
| | -20°C | Ductility | % | 100 | 0 | 60 | 40 | 0 | 100 |
| | -30°C | Ductility | % | 60 | 0 | 0 | 40 | 0 | 40 |
| Tensile | 5 mm/min | Modulus | GPa | 2.4 | 3.5 | 3.4 | 2.5 | 3.9 | 3.7 |
| | | Elongation | % | 118 | 79 | 81 | 122 | 76 | 95 |
| PC Mw | | Pellets | kg/mol | 52.0 | 51.2 | 51.6 | 52.0 | 52.2 | 51.13 |
| | | Parts | kg/mol | 50.8 | 50.5 | 50.2 | 50.4 | 51.3 | 50.5 |
| | | Retention | % | 98% | 99% | 97% | 97% | 98% | 99% |
| | Hydro-aged | Parts | kg/mol | 45.9 | 37.9 | 36.3 | 40.6 | 41.5 | 36.1 |
| | | Retention | % | 88% | 74% | 70% | 78% | 79% | 71% |

The results showed improvement in the impact strength for blends with filler and talc compared to a blend containing only the talc (e.g. compare E52 with R52b). In addition, the blend with filler and talc had a higher tensile modulus than the blends containing only impact modifier (e.g. compare E52 with R52a). This allows for a balance of the MVR, impact strength, and tensile modulus.

### EXAMPLES 58-61

Some blends were made to determine whether the acid used to neutralize the talc made a significant difference. The two acids used were phosphorous acid (H₃PO₃) and mono zinc phosphate (MZP). The results are shown in Table 10.

**Table 10.**

| | | | Unit | R58 | E58 | E59 | R60 | E60 | E61 |
|---|---|---|---|---|---|---|---|---|---|
| PC 1 (high Mw) | | | % | 45 | 44.5 | 44.5 | 37.5 | 37 | 37 |
| PC 3 (low Mw) | | | % | 45 | 44.5 | 44.5 | 37.5 | 37 | 37 |
| SAN | | | % | | | | 10 | 10 | 10 |
| MBS | | | % | | | | 5 | 5 | 5 |
| Talc 1 (1.2µm) | | | % | 10 | 10 | 10 | 10 | 10 | 10 |
| H₃PO₃ | | | % | 0.3 | 0.3 | | 0.3 | 0.3 | |
| MZP | | | % | | | 0.15 | | | 0.15 |
| SAS | | | % | | 1 | 1 | | 1 | 1 |
| MVR | 260°C, 5kg, 4' | | cc/10 min | 15.6 | 13.1 | 13.0 | 15.2 | 15.9 | 14.7 |
| | 260°C, 5kg, 18' | | cc/10 min | 15.3 | 13.5 | 13.1 | 14.0 | 14.7 | 13.9 |
| | | Retention | % | 98% | 103% | 101% | 92% | 92% | 95% |
| MV | 280°C/1500s⁻¹ | | Pa·s | 289 | 320 | 322 | 175 | 176 | 183 |
| Vicat | B120 | | °C | 142.8 | 142.7 | 142.6 | 139.6 | 137.7 | 138.0 |
| INI | 23°C | Impact | kJ/m² | 6.8 | 30.1 | 22.2 | 22.6 | 43.0 | 43.5 |
| | 0°C | Impact | kJ/m² | 7.0 | 14.5 | 13.5 | 11.8 | 29.0 | 24.6 |
| | -30°C | Impact | kJ/m² | 6.8 | 10.9 | 10.5 | 9.0 | 13.4 | 12.8 |
| MAI | 23°C | Ductility | % | 100 | 100 | 100 | 100 | 100 | 100 |
| | 0°C | Ductility | % | 0 | 100 | 100 | 100 | 100 | 100 |
| | -10°C | Ductility | % | 0 | 100 | 100 | 100 | 100 | 100 |
| | -20°C | Ductility | % | 0 | 100 | 100 | 50 | 100 | 100 |
| | -30°C | Ductility | % | 0 | 0 | 40 | 80 | 100 | 80 |
| Tensile | 5 mm/min | Modulus | GPa | 3.5 | 3.3 | 3.4 | 3.4 | 3.3 | 3.3 |
| | | Elongation | % | 89 | 112 | 109 | 95 | 110 | 109 |
| PC Mw | | Pellets | kg/mol | 50.0 | 51.4 | 51.4 | 51.1 | 50.9 | 51.5 |
| | | Parts | kg/mol | 49.4 | 50.8 | 50.9 | 50.6 | 50.5 | 50.3 |
| | | Retention | % | 99% | 99% | 99% | 99% | 99% | 98% |

Both MZP and SAS showed an improvement in impact strength compared to the reference samples. The impact strength was higher for E60/E61 compared to E58/E59. E60/E61 also had lower melt viscosity, although the MVR values were similar. The tensile modulus for all of the Examples was similar, as was the PC Mw retention.

### Paint Adhesion Tests

Secondary operations, such as paint adhesion, could be influenced by the presence of the sulfonate salt. Paint adhesion was therefore verified on samples of two compositions with and without 1.5 wt% SAS. Two different paint systems were used, both with and without a primer. Paint adhesion was determined under various conditions and none of them showed any significant differences. It could be concluded that SAS addition has very little influence on paint adhesion, or in other words SAS exhibits no detrimental effects on paint adhesion.

In one embodiment, a composition comprises: a polycarbonate polymer; a mineral filler; and a sulfonate salt of Formula (II):

T-E Formula (II)

wherein T is aliphatic and contains at least 7 carbon atoms; E is aliphatic, aromatic, or cycloaliphatic, and E contains at least one SO₃⁻M⁺ group, where each M is an alkali metal; wherein the composition has a tensile modulus of at least 2.5 GPa when measured according to ISO 527.

In one embodiment, an article contains a composition comprising a polycarbonate polymer; a mineral filler; and a sulfonate salt of Formula (II):

T-E Formula (II)

wherein T is aliphatic and contains at least 7 carbon atoms; E is aliphatic, aromatic, or cycloaliphatic, and E contains at least one SO₃⁻M⁺ group, where each M is an alkali metal; wherein the composition has a tensile modulus of at least 2.5 GPa when measured according to ISO 527; wherein the article is a vehicle body panel, a vehicle interior panel, a vehicle instrument panel, a spoiler, a fairing, a vehicle interior trim part, a grill, a seat back, a piece of furniture, an office partition, a surfboard, a surgical cart, a tool or equipment housing, a medical device, or a toy.

In one embodiment, a method of improving the notched Izod impact strength of a base composition comprising a polycarbonate and a mineral filler, comprises: adding a sulfonate salt to the base composition to obtain an improved composition, wherein the improved composition has a notched Izod impact strength that is from 1.1 times to about 10 times greater than the notched Izod impact strength of the base formulation.

In the various embodiments, (i) the composition has a tensile modulus of at least 3 GPa; and/or (ii) the composition has a notched Izod impact strength of from about 25 to about 90 kJ/m² when measured according to ISO 180 at room temperature and a thickness of 4 millimeters; and/or (iii) the composition has a melt volume rate (MVR) of at least 5 cc/10 min when measured according to ISO 1133 at 260°C and a 5 kg load; and/or (iv) the composition has a ductility of at least 80% when measured according to ISO 6603 at a speed of 2.25 meters/second and a thickness of 3.2 millimeters at a temperature of 0°C; and/or (v) the composition has a rubber block content of from about 0.5 wt% to about 10 wt% of the composition; and/or (vi) the polycarbonate polymer is at least about 20 wt% of the composition; and/or (vii) the mineral filler comprises talc, wollastonite, clay, mica, zinc sulfide, zinc oxide, or titanium dioxide; and/or (viii) the mineral filler is at least 3 wt% of the composition; and/or (ix) the median particle size of the mineral filler is 15 microns or less; and/or (x) the sulfonate salt is at least 0.5 wt% of the composition; and/or (xi) the sulfonate salt has the structure of Formula (III):

CH₃-(CH₂)ₙ-(Ar)ₘ-(SO₃-M⁺)ₚ Formula (III)

wherein n is an integer from 6 to 17; m is 0 or 1; Ar is aromatic or cycloaliphatic; p is an integer from 1 to 5; and each M is an alkali metal; wherein T is aliphatic; and E is aliphatic, aromatic, or cycloaliphatic; and E contains at least one SO₃⁻M⁺ group, where each M is an alkali metal; and/or (xii) the composition does not contain a flame retardant; and/or (xiii) the composition further comprises a flow promoter; and/or (xiv) the flow promoter is a styrene-acrylonitrile copolymer, poly(methyl methacrylate), a poly alpha-olefin, polyethylene glycol, polypropylene glycol, or a monomeric or oligomeric organophosphorus compound; and/or (xv) the flow promoter is from about 1 wt% to about 30 wt% of the composition; and/or (xvi) the composition further comprises an impact modifier; and/or (xvii) the impact modifier is a methacrylate-butadiene-styrene polymer, an acrylonitrile-butadiene-styrene polymer, an acrylic polymer, a grafted polymer, a block copolymer, or a core-shell impact modifier; and/or (xviii) the impact modifier is from about 2 wt% to about 50 wt% of the composition; and/or (xix) the composition further comprises an acid stabilizer; and/or (xx) the acid stabilizer is phosphorous acid, phosphoric acid, mono zinc phosphate, mono sodium phosphate, or sodium acid pyrophosphate; and/or (xxi) the composition is capable of retaining at least 90% of its weight average molecular weight through processing to form a molded article; and/or (xxii) the polycarbonate polymer is a post-consumer recycled material or a post-industrial recycled material; and/or (xxiii) the composition further comprises a stabilizer package; and/or (xxiv) a surface of the article is painted and exhibits no detrimental effects on paint adhesion.

The present disclosure has been described with reference to exemplary embodiments. Obviously, modifications and alterations will occur to others upon reading and understanding the preceding detailed description. It is intended that the present disclosure be construed as including all such modifications and alterations insofar as they come within the scope of the appended claims or the equivalents thereof.

## Claims

1. A composition comprising, based on the total weight of the composition:
from 70 wt% to 90 wt% of a polycarbonate polymer;
from 8 wt% to 20 wt% of a mineral filler comprising talc, clay, mica, zinc sulfide, zinc oxide, or titanium dioxide; and
from 0.5 wt% to 2.5 wt% of a sulfonate salt of Formula (II):
T-E Formula (II)
wherein T is aliphatic and contains at least 7 carbon atoms; E is aliphatic, aromatic, or cycloaliphatic, and E contains at least one SO₃⁻M⁺ group, where each M is an alkali metal; and
an acid stabilizer; wherein the weight ratio of the acid stabilizer to the mineral filler is from 0.01 to 0.05; and
wherein the composition has a tensile modulus of at least 2.5 GPa when measured according to ISO 527.

2. The composition of claim 1, wherein the composition has a tensile modulus of at least 3 GPa; and/or a notched Izod impact strength of from 25 to 90 kJ/m² when measured according to ISO 180 at room temperature and a thickness of 4 millimeters; and/or a melt volume rate (MVR) of at least 5 cc/10 min when measured according to ISO 1133 at 260°C and a 5 kg load; and/ora ductility of at least 80% when measured according to ISO 6603 at a speed of 2.25 meters/second and a thickness of 3.2 millimeters at a temperature of 0°C.

3. The composition of any of claims 1-2, wherein the composition has a rubber block content of from 0.5 wt% to 10 wt% of the composition.

4. The composition of any of claims 1-3, wherein the median particle size of the mineral filler is 15 microns or less.

5. The composition of any of claims 1-4, wherein the sulfonate salt has the structure of Formula (III):
CH₃-(CH₂)ₙ-(Ar)ₘ-(SO3-M⁺)ₚ Formula (III)
wherein n is an integer from 6 to 17; m is 0 or 1; Ar is aromatic or cycloaliphatic; p is an integer from 1 to 5; and each M is an alkali metal.
wherein T is aliphatic; and E is aliphatic, aromatic, or cycloaliphatic; and E contains at least one SO₃⁻M⁺ group, where each M is an alkali metal.

6. The composition of any of claims 1-5, wherein the composition does not contain a halogen-containing flame retardant.

7. The composition of any of claims 1-6, further comprising a flow promoter, wherein the flow promoter is a styrene-acrylonitrile copolymer, poly(methyl methacrylate), a poly alpha-olefin, polyethylene glycol, polypropylene glycol, or a monomeric or oligomeric organophosphorus compound, and
wherein the flow promoter is from 1 wt% to 30 wt% of the composition.

8. The composition of any of claims 1-7, further comprising an impact modifier, wherein the impact modifier is a methacrylate-butadiene-styrene polymer, an acrylonitrile-butadiene-styrene polymer, an acrylic polymer, a grafted polymer, a block copolymer, or a core-shell impact modifier, and
wherein the impact modifier is from 2 wt% to 50 wt% of the composition.

9. The composition of any of claims 1-8, wherein said acid stabilizer is phosphorous acid, phosphoric acid, mono zinc phosphate, mono sodium phosphate, or sodium acid pyrophosphate.

10. The composition of any of claims 1-9, wherein the composition is capable of retaining at least 90% of its weight average molecular weight through processing to form a molded article.

11. The composition of any of claims 1-10, wherein the polycarbonate polymer is a post-consumer recycled material or a post-industrial recycled material.

12. The composition of any of claims 1-11, further comprising a stabilizer package.

13. An article containing the composition of any of claims 1-12, wherein the article is a vehicle body panel, a vehicle interior panel, a vehicle instrument panel, a spoiler, a fairing, a vehicle interior trim part, a grill, a seat back, a piece of furniture, an office partition, a surfboard, a surgical cart, a tool or equipment housing, a medical device, or a toy.

14. The article of claim 13, wherein a surface of the article is painted and exhibits no detrimental effects on paint adhesion.

15. A method of improving the notched Izod impact strength of a base composition comprising a polycarbonate and a mineral filler comprising talc, clay, mica, zinc sulfide, zinc oxide, or titanium dioxide, the method comprising:
adding a sulfonate salt of Formula (II) as defined in claim 1 to the base composition to obtain an improved composition according to claim 1,
wherein the improved composition has a notched Izod impact strength that is from 1.1 times to 10 times greater than the notched Izod impact strength of the base formulation.

## Patentansprüche

1. Eine Zusammensetzung, die, basierend auf dem Gesamtgewicht der Zusammensetzung, Folgendes umfasst:
von 70 Gewichtsprozent bis 90 Gewichtsprozent eines Polycarbonat-Polymers,
von 8 Gewichtsprozent bis 20 Gewichtsprozent eines mineralischen Füllstoffs, der Talkum, Ton, Glimmermineral, Zinksulfid, Zinkoxid oder Titandioxid umfasst; und
von 0,5 Gewichtsprozent bis 2,5 Gewichtsprozent eines Sulfonatsalzes mit der Formel (II) :
T-E Formel (II),
worin T aliphatisch ist und mindestens 7 Kohlenstoffatome enthält; E ist aliphatisch, aromatisch oder cycloaliphatisch, und E enthält mindestens eine SO₃⁻M⁺-Gruppe, worin jedes M ein Alkalimetall ist; und
einen Säurestabilisator; worin das Gewichtsverhältnis des Säurestabilisators zu dem mineralischen Füllstoff von 0,01 bis 0,05 beträgt; und
worin die Zusammensetzung ein Zugmodul von mindestens 2,5 GPa hat, wenn gemessen nach ISO 527.

2. Die Zusammensetzung gemäß Anspruch 1, worin die Zusammensetzung Folgendes hat: ein Zugmodul von mindestens 3 GPa; und/oder eine Kerbschlagzähigkeit nach Izod von 25 bis 90 kJ/m², wenn gemessen nach ISO 180 bei Raumtemperatur und einer Dicke von 4 Millimetern; und/oder eine Schmelzvolumenrate (melt volume rate, MVR) von mindestens 5 cc/10 min, wenn gemessen nach ISO 1133 bei 260°C und einer 5 kg Last; und/oder eine Duktilität von mindestens 80%, wenn gemessen nach ISO 6603 bei einer Geschwindigkeit von 2,25 Metern/Sekunde und einer Dicke von 3,2 Millimetern bei einer Temperatur von 0°C.

3. Die Zusammensetzung gemäß einem beliebigen der Ansprüche 1-2, wobei die Zusammensetzung einen Gummiblockgehalt von 0,5 Gewichtsprozent bis 10 Gewichtsprozent der Zusammensetzung hat.

4. Die Zusammensetzung gemäß einem beliebigen der Ansprüche 1-3, worin die mittlere Partikelgröße des mineralischen Füllstoffs 15 Mikron oder weniger beträgt.

5. Die Zusammensetzung gemäß einem beliebigen der Ansprüche 1-4, worin das Sulfonätsalz die Struktur mit der Formel (III) hat:
CH₃-(CH₂)ₙ-(Ar)ₘ-(SO₃-M⁺)ₚ Formel (III),
worin n eine ganze Zahl von 6 bis 17 ist; m ist 0 oder 1; Ar ist aromatisch oder cycloaliphatisch; p ist eine ganze Zahl von 1 bis 5; und jedes M ist ein Alkalimetall.
worin T aliphatisch ist; und E ist aliphatisch, aromatisch oder cycloaliphatisch; und E enthält mindestens eine SO₃⁻M⁺-Gruppe, worin jedes M ein Alkalimetall ist.

6. Die Zusammensetzung gemäß einem beliebigen der Ansprüche 1-5, worin die Zusammensetzung kein Halogen-enthaltendes Flammverzögerungsmittel enthält.

7. Die Zusammensetzung gemäß einem beliebigen der Ansprüche 1-6, die weiter eine Fließhilfe umfasst, worin die Fließhilfe ein Styrol-Acrylonitril-Copolymer, Poly(methylmethacrylat), ein Poly-alpha-olefin, Polyethylenglykol, Polypropylenglykol oder eine monomere oder oligömere phosphororganische Verbindung ist, und
worin die Fließhilfe von 1 Gewichtsprozent bis 30 Gewichtsprozent der Zusammensetzung ausmacht.

8. Die Zusammensetzung gemäß einem beliebigen der Ansprüche 1-7, die weiter einen Elastifikator umfasst, worin der Elastifikator ein Methacrylat-Butadien-Styrol-Polymer, ein Acrylonitril-Butadien-Styrol-Polymer, ein Acrylpolymer, ein Pfropfpolymer, ein Blockcopolymer oder ein Kern-Schale-Elastifikator ist, und
worin der Elastifikator 2 Gewichtsprozent bis 50 Gewichtsprozent der Zusammensetzung ausmacht.

9. Die Zusammensetzung gemäß einem beliebigen der Ansprüche 1-8, worin der Säurestabilisator phosphorige Säure, Phosphorsäure, Monozinkphosphat, Mononatriumphosphat oder natriumsaures Pyrophosphat ist.

10. Die Zusammensetzung gemäß einem beliebigen der Ansprüche 1-9, worin die Zusammensetzung in der Lage ist, mindestens 90% ihres Gewichtsmittel-Molekulargewichts während der Verarbeitung beizubehalten, um einen Formling zu bilden.

11. Die Zusammensetzung gemäß einem beliebigen der Ansprüche 1-10, worin das Polycarbonat-Polymer ein vom Verbraucher gebrauchtes recyceltes Material oder ein von der Industrie gebrauchtes recyceltes Material ist.

12. Die Zusammensetzung gemäß einem beliebigen der Ansprüche 1-11, die weiter eine Stabilisator-Einheit umfasst.

13. Ein Artikel, der die Zusammensetzung gemäß einem beliebigen der Ansprüche 1-12 enthält, worin der Artikel eine Fahrzeugkarosserietafel, eine Tafel im Fahrzeuginnenraum, eine Fahrzeuginstrumententafel, ein Spoiler, eine Verkleidung, eine Fahrzeuginnenausstattung, ein Gitter, eine Rückenlehne, ein Möbelstück, eine Bürotrennwand, ein Surfbrett, ein Operationswagen, ein Werkzeug oder Ausrüstungsgehäuse, eine medizinische Vorrichtung oder ein Spielzeug ist.

14. Der Artikel gemäß Anspruch 13, worin eine Oberfläche des Gegenstands angestrichen ist und er keine nachteiligen Effekte auf die Haftung des Anstrichs zeigt.

15. Ein Verfahren zur Verbesserung der Kerbschlagzähigkeit nach Izod einer Basiszusammensetzung, die ein Polycarbonat und einen mineralischen Füllstoff umfasst, der Talkum, Ton, Glimmermineral, Zinksulfid, Zinkoxid oder Titandioxid umfasst, wobei das Verfahren Folgendes umfasst:
Hinzugeben eines Sulfonatsalzes mit der Formel (II), wie in Anspruch 1 definiert, zu der Basiszusammensetzung, um eine verbesserte Zusammensetzung gemäß Anspruch 1 zu erhalten,
worin die verbesserte Zusammensetzung eine Kerbschlagzähigkeit nach Izod hat, die von 1,1-mal bis 10-mal höher ist als die Kerbschlagzähigkeit nach Izod der Basisformulierung.

## Revendications

1. Composition comprenant, par rapport au poids total de la composition :
de 70 % en poids à 90 % en poids d'un polymère de polycarbonate ;
de 8 % en poids à 20 % en poids d'une charge minérale comprenant du talc, de l'argile, du mica, du sulfure de zinc, de l'oxyde de zinc ou du dioxyde de titane ; et
de 0,5 % en poids à 2,5 % en poids d'un sel de sulfonate de formule (II) :
T-E Formule (II)
dans laquelle T est un groupe aliphatique et comprend au moins 7 atomes de carbone ; E est un groupe aliphatique, aromatique ou cycloaliphatique, et E comprend au moins un groupe SO₃⁻M⁺, où chaque M est un métal alcalin ; et
un stabilisateur acide, le rapport en poids du stabilisateur acide à la charge minérale étant de 0,01 à 0,05 ; et
la composition ayant un module de traction d'au moins 2,5 GPa lorsqu'il est mesuré selon la norme ISO 527.

2. Composition selon la revendication 1, dans laquelle la composition a un module de traction d'au moins 3 GPa ; et/ou une résistance au choc Izod sur éprouvette entaillée de 25 à 90 kJ/m² lorsqu'elle est mesurée selon la norme ISO 180 à température ambiante et une épaisseur de 4 mm ; et/ou un indice de fluidité à chaud (MVR) d'au moins 5 cm³/10 minutes lorsqu'il est mesuré selon la norme ISO 1133 à 260 °C et une charge de 5 kg ; et/ou une ductilité d'au moins 80 % lorsqu'elle est mesurée selon la norme ISO 6603 à une vitesse de 2,25 mètres/seconde et une épaisseur de 3,2 millimètres à une température de 0 °C.

3. Composition selon l'une quelconque des revendications 1 à 2, dans laquelle la composition a une teneur en bloc de caoutchouc de 0,5 % en poids à 10 % en poids de la composition.

4. Composition selon l'une quelconque des revendications 1 à 3, dans laquelle la taille de particule médiane de la charge minérale est inférieure ou égale à 15 µm.

5. Composition selon l'une quelconque des revendications 1 à 4, dans laquelle le sel de sulfonate répond à la structure de formule (III) :
CH₃-(CH₂)ₙ-(Ar)ₘ-(SO₃-M⁺)ₚ Formule (III)
dans laquelle n est un nombre entier de 6 à 17 ; m vaut 0 ou 1 ; Ar est un groupe aromatique ou cycloaliphatique ; p est un nombre entier de 1 à 5 ; et chaque M est un métal alcalin.
dans laquelle T est un groupe aliphatique ; et E est un groupe aliphatique, aromatique ou cycloaliphatique, et E comprend au moins un groupe SO₃⁻M⁺, où chaque M est un métal alcalin.

6. Composition selon l'une quelconque des revendications 1 à 5, dans laquelle la composition ne contient pas d'ignifuge contenant un halogène.

7. Composition selon l'une quelconque des revendications 1 à 6, comprenant en outre un promoteur d'écoulement,
dans laquelle le promoteur d'écoulement est un copolymère de styrène-acrylonitrile, un polyméthacrylate de méthyle, une poly-alpha-oléfine, un polyéthylène glycol, un polypropylène glycol, ou un composé organophosphoré monomère ou oligomère, et
dans laquelle le promoteur d'écoulement représente de 1 % en poids à 30 % en poids de la composition.

8. Composition selon l'une quelconque des revendications 1 à 7, comprenant en outre un modificateur d'impact,
dans laquelle le modificateur d'impact est un polymère de méthacrylate-butadiène-styrène, un polymère d'acrylonitrile-butadiène-styrène, un polymère acrylique, un polymère greffé, un copolymère séquencé, ou un modificateur d'impact de type coeur-enveloppe, et
dans laquelle le modificateur d'impact représente de 2 % en poids à 50 % en poids de la composition.

9. Composition selon l'une quelconque des revendications 1 à 8, dans laquelle ledit stabilisateur acide est l'acide phosphoreux, l'acide phosphorique, le monophosphate de zinc, le monophosphate de sodium ou le pyrophosphate d'acide sodique.

10. Composition selon l'une quelconque des revendications 1 à 9, dans laquelle la composition est capable de retenir au moins 90 % de son poids moléculaire moyen en poids pendant le traitement pour former un article moulé.

11. Composition selon l'une quelconque des revendications 1 à 10, dans laquelle le polymère de polycarbonate est un matériau recyclé après consommation ou un matériau post-industriel recyclé.

12. Composition selon l'une quelconque des revendications 1 à 11, comprenant en outre un ensemble stabilisant.

13. Article contenant la composition selon l'une quelconque des revendications 1 à 12, dans lequel l'article est un panneau de carrosserie de véhicule, un panneau d'intérieur de véhicule, un tableau de bord de véhicule, un aileron, un carénage, une partie d'habillage intérieur de véhicule, une grille, un siège arrière, un meuble, une cloison de bureau, une planche de surf, un chariot chirurgical, un boîtier d'outil ou d'appareil, un dispositif médical ou un jouet.

14. Article selon la revendication 13, dans lequel une surface de l'article est peinte et n'exhibe pas d'effets néfastes sur l'adhérence de la peinture.

15. Procédé d'amélioration de la résistance au choc Izod sur éprouvette entaillée d'une composition de base comprenant un polycarbonate et une charge minérale comprenant du talc, de l'argile, du mica, du sulfure de zinc, de l'oxyde de zinc ou du dioxyde de titane, le procédé consistant à :
ajouter un sel de sulfonate de formule (II) tel que défini selon la revendication 1 à la composition de base pour obtenir une composition améliorée selon la revendication 1,
dans lequel la composition améliorée a une résistance au choc Izod sur éprouvette entaillée qui est de 1,1 fois à 10 fois supérieure à la résistance au choc Izod sur éprouvette entaillée de la formulation de base.
